# EUROPÄISCHE PATENTSCHRIFT

(11) **EP 4 695 071 B1**
(45) Veröffentlichungstag und Bekanntmachung des Hinweises auf die Patenterteilung: **02.12.2026**
(21) Anmeldenummer: 25711046.0
(22) Anmeldetag: 06.03.2025
(51) Int. Cl.: B29C 49/04, B29C 49/20, B29C 49/24, B29C 49/42, B29C 49/48, B29C 49/54, B29C 49/58, B29L 31/00

(54) **VORRICHTUNG ZUM EXTRUSIONSBLASFORMEN UND VERFAHREN ZUR HERSTELLUNG EINES BLASFORMTEILS**
DEVICE FOR EXTRUSION BLOW MOULDING AND METHOD FOR PRODUCING A BLOW MOULDED PART
DISPOSITIF DE MOULAGE PAR EXTRUSION-SOUFFLAGE ET PROCÉDÉ DE FABRICATION D'UNE PIÈCE MOULÉE PAR SOUFFLAGE

(30) Priorität: 05.07.2024 DE 102024119190
(43) Veröffentlichungstag der Anmeldung: 18.02.2026
(73) Patentinhaber: Elkamet Kunststofftechnik GmbH, 35216 Biedenkopf (DE); Elkamet s.r.o., 33023 Nyrany (CZ)
(72) Erfinder: TRYLC, Michal, 30100 Plzen (CZ); SVETLIK, Daniel, 33008 Zruc-Senec (CZ)
(74) Vertreter: DREISS Patentanwälte PartG mbB
(86) Internationale Anmeldenummer: PCT/EP2025/056101
(87) Internationale Veröffentlichungsnummer: WO 2026/008170

(56) Entgegenhaltungen:
- DE-A1- 102021 130 343
- US-A1- 2010 255 234
- US-A1- 2013 049 256
- US-A1- 2015 001 229
- US-A1- 2016 114 521

## Beschreibung

Die Erfindung betrifft eine Vorrichtung zum Extrusionsblasformen eines Blasformteils, mit einer Extrusionsdüse zur Extrusion eines schlauchförmigen Vorformlings, mit einem mehrteiligen Werkzeug, das eine Kavität zur Anordnung des Vorformlings aufweist, wobei die Kavität an einem ersten Halsbereich des Werkzeugs mündet, und mit einem ersten Dorn zur Anordnung an und/oder in dem ersten Halsbereich. Die Erfindung betrifft ferner ein Verfahren zur Herstellung eines Blasformteils.

Aus dem Stand der Technik (bspw. aus der US 2016/114521 A1, der US 2013/049256 A1, der DE 10 2021 130 343 A1, der US 2010/255234 A1 und der US 2015/001229 A1) bekannte Vorrichtungen zum Extrusionsblasformen eines Blasformteils weisen einen ersten Dorn zur Anordnung an und/oder in dem ersten Halsbereich des Werkzeugs auf. Der erste Dorn kann verschiedene Funktionen haben, beispielsweise eine Abformfunktion einer Oberfläche des ersten Dorns, eine Haltefunktion für ein Einlegeteil oder eine Zuführung von Blasluft. Aufgrund des Kontakts des ersten Dorns mit dem Werkzeug und/oder aufgrund der räumlichen Nähe des ersten Dorns zu der Kavität des Werkzeugs ist der erste Dorn einer erhöhten Wärmezufuhr ausgesetzt. Diese Wärmezufuhr ist bedingt durch den aus einem heißen Kunststoffmaterial bestehenden Vorformling und - nach Blasumformung des Vorformlings - auch durch das zunächst noch heiße Blasformteil. Eine weitere, besonders starke Wärmequelle ist die Extrusionsdüse, die benachbart zu dem Werkzeug angeordnet ist.

Die vorstehend erörterte Wärmezufuhr bedingt eine Erwärmung des ersten Dorns. Eine zu hohe Erwärmung des ersten Dorns kann nachteilige Folgen für die Prozessstabilität des Blasformens haben. Beispielsweise ist es möglich, dass an den ersten Dorn angrenzendes Kunststoffmaterial des Blasformteils sich zu stark erhitzt oder zu langsam abkühlt, sodass ein zu dem ersten Dorn benachbarter erster Halsabschnitt des Blasformteils nach Öffnung des Werkzeugs noch eine zu hohe Temperatur aufweist und daher instabil ist und bei Abtrennung des ersten Dorns von dem Blasformteil deformiert oder beschädigt wird.

Eine vergleichsweise einfache Möglichkeit zur Eingrenzung der vorstehenden Probleme besteht darin, nach Herstellung eines ersten Blasformteils und vor Herstellung eines zweiten Blasformteils eine Ruhezeit einzuhalten, welche zur Abkühlung von Bestandteilen der Vorrichtung dient. Eine solche Ruhezeit ist aber aus wirtschaftlichen Gründen unerwünscht. Weiterhin ist es möglich, Teile der Vorrichtung mit einer Wasserkühlung zu kühlen. Eine solche Wasserkühlung erfordert jedoch einen hohen konstruktiven Aufwand.

Hiervon ausgehend liegt der vorliegenden Erfindung die Aufgabe zugrunde, eine Vorrichtung und ein Verfahren anzugeben, welche eine effiziente Herstellung eines Blasformteils vereinfachen.

Diese Aufgabe wird bei einer Vorrichtung zum Extrusionsblasformen der eingangs genannten Art erfindungsgemäß dadurch gelöst, dass der erste Dorn längs einer zentralen ersten Dornachse mehrteilig ist und ein kavitätsfernes erstes Grundteil und ein kavitätsnahes erstes Halsteil aufweist, wobei das erste Grundteil und das erste Halsteil über eine erste Verbindungseinrichtung lösbar miteinander verbunden sind.

Die erfindungsgemäße Vorrichtung umfasst einen ersten Dorn mit einem kavitätsfernen ersten Grundteil. Dieses Grundteil hat in seinem mit dem kavitätsnahen ersten Halsteil verbundenen Zustand eine Haltefunktion für das erste Halsteil. Das erste Halsteil ist zumindest während einer Blasumformung des Vorformlings an oder in dem ersten Halsbereich des Werkzeugs angeordnet und kann verschiedene, nachfolgend noch erläuterte Funktionen haben.

Erfindungsgemäß wurde erkannt, dass es vorteilhaft ist, den ersten Dorn in ein erstes Grundteil und ein erstes Halsteil aufzuteilen und diese Teile mittels einer ersten Verbindungseinrichtung miteinander lösbar zu verbinden. Dies hat folgende Vorteile:
Durch die Trennbarkeit des ersten Halsteils von dem ersten Grundteil ist es möglich, bei Verwendung desselben ersten Grundteils verschiedene, gegeneinander austauschbare erste Halsteile zu verwenden. Dies beugt einer zu hohen Erwärmung des kavitätsnahen Abschnitts des ersten Dorns vor, sodass die Vorrichtung zeitlich durchgängig und ohne Einhaltung von Ruhezeiten oder Kühlphasen zur Herstellung von Blasformteilen nutzbar ist.

Durch die Trennbarkeit des ersten Halsteils von dem ersten Grundteil ist es ferner möglich, dass das erste Halsteil - nach Ausformung eines Blasformteils und nach Öffnung des Werkzeugs - zunächst an dem Blasformteil verbleiben und dort als Auskühllehre dienen kann, und zwar so lange, bis das Blasformteil ausreichend formstabil für eine Abtrennung des ersten Halsteils von dem Blasformteil ist. Dieser Abkühlvorgang findet vorzugsweise in einem Zustand statt, in welchem das erste Halsteil von dem ersten Grundteil und somit von der Vorrichtung getrennt ist, sodass die Vorrichtung - unter Verwendung eines zusätzlichen ersten Halsteils und unter Verwendung desselben ersten Grundteils - während der Abkühlung des Blasformteils bereits zur Herstellung eines weiteren Blasformteils genutzt werden kann.

Ein zwischenzeitlicher Verbleib des ersten Halsteils an dem Blasformteil ist auch dann vorteilhaft, wenn das erste Halsteil dazu dient, ein an oder in dem Blasformteil vorzusehendes, üblicherweise metallisches Einlegeteil zu halten. Nach seiner Ausformung kann das Blasformteil - nach Öffnung des Werkzeugs - zusammen mit dem ersten Halsteil aus dem Werkzeug entnommen und abseits der Extrusionsblasvorrichtung gehandhabt, bearbeitet und/oder gekühlt werden. Dadurch ist es möglich, die Trennung des ersten Halsteils von dem Einlegeteil außerhalb der Vorrichtung und derart vorzunehmen, dass entsprechende Lösekräfte nur an dem Einlegeteil und an dem ersten Halsteil wirken, nicht aber an dem Kunststoffmaterial des Blasformteils. Auf diese Weise kann auch ein noch nicht vollständig formstabiles Blasformteil vor einer Beschädigung geschützt werden. Die durch gegeneinander austauschbare erste Halsteile erzielbaren und vorstehend bereits erläuterten thermischen Vorteile bestehen hier ebenfalls. Zudem kann, insbesondere vor der Trennung des ersten Halsteils von dem Einlegeteil und/oder vor anderen Nachbearbeitungsschritten, zur Stabilisierung des Blasformteils eine Kühlzeit vorgesehen werden, wobei die Vorrichtung zeitlich parallel zur Herstellung eines weiteren Blasformteils verfügbar ist.

Schließlich haben die Trennbarkeit des ersten Halsteils von dem ersten Grundteil und ein einstweiliger Verbleib des ersten Halsteils an einem frisch hergestellten Blasformteil den Vorteil, dass ein Verfahrweg des ersten Dorns verkürzt werden kann, und zwar um eine entlang der zentralen ersten Dornachse vorhandene Länge des ersten Halsteils. Hierdurch kann eine Vorrichtung bei Nutzung eines vorgegebenen Bauraums zur Herstellung vergleichsweise größerer Blasformteile verwendet werden.

Nachfolgend werden weitere vorteilhafte Ausgestaltungen der Vorrichtung beschrieben.

Bevorzugt umfasst die erste Verbindungseinrichtung eine Kupplungsvorrichtung, insbesondere eine Schnellkupplungsvorrichtung. Diese ermöglicht ein schnelles und einfaches Verbinden des ersten Grundteils und des ersten Halsteils sowie ein schnelles und einfaches Lösen des ersten Halsteils von dem ersten Grundteil.

Es ist ferner bevorzugt, wenn die Vorrichtung eine erste Steuereinrichtung zur Steuerung des Verbindungszustands der ersten Verbindungseinrichtung umfasst, insbesondere eine erste Steuereinrichtung zur Fernsteuerung des Verbindungszustands der ersten Verbindungseinrichtung. Auf diese Weise kann der Verbindungszustand der ersten Verbindungseinrichtung in einfacher Weise gesteuert werden, insbesondere ohne dass ein manueller Eingriff und eine manuelle Handhabung der Verbindungseinrichtung erforderlich wäre.

Wie eingangs erwähnt, kann das erste Halsteil verschiedene Funktionen haben. Eine bevorzugte Möglichkeit ist, dass das erste Halsteil eine Außenfläche aufweist, welche zur Abformung eines ersten Innenflächenabschnitts des Blasformteils ausgebildet ist. Auf diese Weise kann ein Blasformteil hergestellt werden, dessen Außenflächen durch Abformung an der Kavität des Werkzeugs hergestellt werden, wobei ein Innenflächenabschnitt eines Halsabschnitts des Blasformteils durch die Außenfläche des ersten Halsteils abgeformt werden kann.

Eine weitere Funktion des ersten Halsteils kann darin bestehen, ein erstes Einlegeteil zu halten, das mit dem ersten Halsteil lösbar verbindbar oder verbunden ist, wobei das erste Einlegeteil zum Verbleib an und/oder in dem Blasformteil ausgebildet ist. Bei dem Einlegeteil handelt es sich insbesondere um ein Einlegeteil, das aus einem metallischen Werkstoff hergestellt ist. Das Einlegeteil kann auch als "Insert" bezeichnet werden und dient üblicherweise dazu, eine Öffnung des Blasformteils zu begrenzen, welche zur Befüllung mit einem Gas oder mit einer Flüssigkeit dient. Das erste Einlegeteil bildet - als Bestandteil des Blasformteils - ein Anschlusselement, insbesondere zum Anschluss eines Bossteils, eines Ventils, einer Füllarmatur oder eines Verschlusses.

In vorteilhafter Weise umfasst die Vorrichtung ein kavitätsnahes zusätzliches erstes Halsteil, das anstelle des ersten Halsteils lösbar mit dem ersten Grundteil verbindbar ist. Dies eröffnet die Möglichkeit, dass das erste Halsteil an einem ersten Blasformteil verbleibt, während das kavitätsnahe zusätzliche erste Halsteil mit dem Grundteil verbunden ist und für die Herstellung eines zweiten Blasformteils verwendet wird.

Es ist möglich, dass der erste Dorn im Bereich einer der Extrusionsdüse zugewandten Seite des Werkzeugs angeordnet ist, oder dass der erste Dorn im Bereich einer der Extrusionsdüse abgewandten Seite des Werkzeugs angeordnet ist. Je näher der erste Dorn an der Extrusionsdüse angeordnet ist, desto größer ist der erfindungsgemäße Vorteil, dass eine zu hohe Erwärmung eines kavitätsnahen Abschnitts des ersten Dorns vermieden werden kann. Dieser erfindungsgemäße Vorteil ist besonders groß, wenn der erste Dorn an der Extrusionsdüse angeordnet ist.

Es ist möglich, dass der erste Dorn ein erstes Halsteil mit einer Außenfläche zur Abformung eines ersten Innenflächenabschnitts des Blasformteils aufweist und/oder als Haltedorn für ein Einlegeteil ausgeführt ist und nicht gleichzeitig die Funktion hat, Blasluft in einen von dem Vorformling umgrenzten Hohlraum zu bringen. Es ist auch möglich, dass der erste Dorn zusätzlich oder alternativ einen ersten Blaskanal zum Einbringen von Blasluft in einen von dem Vorformling umgrenzten Hohlraum aufweist.

Weitere bevorzugte Ausgestaltungen der Vorrichtung beziehen sich auf den Unteranspruch 9 in Alleinstellung oder auf den Unteranspruch 9 in Kombination mit einem oder mehreren der folgenden zusätzlichen Merkmale oder Merkmalsgruppen:
- dass die zweite Verbindungseinrichtung eine Kupplungsvorrichtung umfasst, insbesondere eine Schnellkupplungsvorrichtung,
   und/oder
- ferner umfassend eine zweite Steuereinrichtung zur Steuerung eines Verbindungszustands der zweiten Verbindungseinrichtung, insbesondere zur Fernsteuerung des Verbindungszustands der zweiten Verbindungseinrichtung, wobei die zweite Steuereinrichtung durch die in Anspruch 3 genannte erste Steuereinrichtung gebildet sein kann,
   und/oder
- dass das zweite Halsteil eine Außenfläche aufweist, welche zur Abformung eines zweiten Innenflächenabschnitts des Blasformteils ausgebildet ist,
   und/oder
- dass das zweite Halsteil mit einem zweiten Einlegeteil lösbar verbindbar oder verbunden ist, wobei das zweite Einlegeteil zum Verbleib an und/oder in dem Blasformteil ausgebildet ist,
   und/oder
- ferner umfassend ein kavitätsnahes zusätzliches zweites Halsteil, das anstelle des zweiten Halsteils lösbar mit dem zweiten Grundteil verbindbar ist,
   und/oder
- dass der erste Dorn und der zweite Dorn auf voneinander abgewandten Seiten des Werkzeugs angeordnet sind,
   und/oder
- dass der zweite Dorn einen zweiten Blaskanal zum Einbringen von Blasluft in einen von dem Vorformling umgrenzten Hohlraum aufweist.

Diese weiteren bevorzugten Ausgestaltungen dienen zur Herstellung von Blasformteilen, welche zwei Halsabschnitte aufweisen, welche vorzugsweise an voneinander abgewandten Enden des Blasformteils angeordnet sind. Zur Herstellung eines solchen Blasformteils wird ein zweiter Dorn verwendet, welcher ebenfalls mehrteilig ist und die Merkmale des Unteranspruchs 9 aufweist. Hierdurch ergeben sich die vorstehend unter Bezugnahme auf den mehrteiligen ersten Dorn erörterten Vorteile auch für den zweiten Dorn.

Hinsichtlich der Ausgestaltungen und Vorteile der Merkmale der weiteren bevorzugten Ausgestaltungen wird zur Vermeidung von Wiederholungen auf die vorstehende Beschreibung insbesondere zu den Merkmalen der Unteransprüche 2 bis 8 Bezug genommen.

Ergänzend wird angemerkt, dass es sich bei einer zweiten Steuereinrichtung zur Steuerung eines Verbindungszustands der zweiten Verbindungseinrichtung des zweiten Dorns in vorteilhafter Weise um die erste Steuereinrichtung der ersten Verbindungseinrichtung handeln kann.

Es wird ferner ergänzt, dass der erste Dorn und der zweite Dorn in vorteilhafter Weise auf voneinander abgewandten Seiten des Werkzeugs angeordnet sind, wobei es ferner bevorzugt ist, dass die erste Dornachse und die zweite Dornachse miteinander fluchten, insbesondere entlang einer zentralen Werkzeugachse, welche einer zentralen Blasformteilachse entspricht.

Optional weist der zweite Dorn einen zweiten Blaskanal zum Einbringen von Blasluft in einen oder den von dem Vorformling umgrenzten Hohlraum auf. Zur Vereinfachung des Aufbaus der Vorrichtung ist es bevorzugt, dass nur einer der beiden Dorne einen Blaskanal aufweist. Daher ist das Merkmal eines "zweiten" Blaskanals lediglich seiner Zuordnung zum zweiten Dorn geschuldet und nicht der Notwendigkeit, dass gleichzeitig zwei Blaskanäle vorgesehen sein müssten.

Die eingangs genannte Aufgabe wird auch durch ein Verfahren mit den Merkmalen des Patentanspruchs 10 gelöst.

Es versteht sich unter Bezugnahme auf die Verfahrensschritte d) und e), dass diese Verfahrensschritte aufeinanderfolgend durchgeführt werden können, beispielsweise für den Fall, dass der schlauchförmige Vorformling außerhalb eines geöffneten Werkzeugs extrudiert werden soll und erst anschließend in dem geöffneten Werkzeug angeordnet werden soll. Es ist aber auch möglich, die Verfahrensschritte d) und e) gleichzeitig durchzuführen, indem der schlauchförmige Vorformling in einen von dem geöffneten Werkzeug umgrenzten Raum hinein extrudiert wird.

Der optionale Verfahrensschritt l), nämlich das Abkühlen des ersten Blasformteils, kann beispielsweise mit einer aktiven Kühlung, beispielsweise durch Zufuhr gekühlter Luft, einhergehen. Der Verfahrensschritt l) kann zusätzlich oder alternativ auch mit einer Wartezeit einhergehen, in welcher sich das erste Blasformteil um eine vorgebbare Temperaturdifferenz abkühlt.

Hinsichtlich der Ausgestaltungen und Vorteile der Verfahrensansprüche 11 bis 13 wird auf die vorstehende Beschreibung zu der erfindungsgemäßen Vorrichtung, insbesondere zu den Merkmalen der Unteransprüche 4 bis 6, Bezug genommen.

Bei Verwendung eines zusätzlichen ersten Halsteils ist es bevorzugt, dass dieses mit dem ersten Grundteil verbunden ist, zumindest während des Abkühlens des ersten Blasformteils und/oder während des Trennens des ersten Halsteils von dem ersten Blasformteil und/oder während einer Nachbearbeitung des ersten Blasformteils. Somit ist es möglich, das erste Grundteil und das zusätzliche erste Halsteil bereits zur Herstellung eines weiteren Blasformteils zu verwenden, während das erste Blasformteil bereits außerhalb des Werkzeugs angeordnet ist. Mit anderen Worten: die Verwendung eines zusätzlichen ersten Halsteils ermöglicht es, unproduktive Nebenzeiten zu vermeiden.

Entsprechende Vorteile und Ausgestaltungen ergeben sich auch für Verfahren gemäß Unteranspruch 15 in Alleinstellung und für Verfahren gemäß Unteranspruch 15 in Kombination mit einem oder mehreren der folgenden zusätzlichen Merkmale oder Merkmalsgruppen:
- Abformen eines Innenflächenabschnitts des zweiten Blasformteils an einer Außenfläche des zweiten Halsteils, und/oder
- vorzugsweise nach b2) oder c2): Bereitstellen eines zweiten Einlegeteils und Verbinden des zweiten Einlegeteils mit dem zweiten Halsteil,
- Durchführung von m2) mit der Maßgabe, dass das zweite Halsteil von dem zweiten Einlegeteil des ersten Blasformteils getrennt wird,
   und/oder
   n2) Bereitstellen eines kavitätsnahen zusätzlichen zweiten Halsteils, das anstelle des zweiten Halsteils lösbar mit dem zweiten Grundteil verbindbar ist,
   o2) lösbares Verbinden des zweiten Grundteils und des zusätzlichen zweiten Halsteils,
- Durchführung der Schritte d) bis m) gemäß Anspruch 10 und der Schritte f2) bis m2) gemäß Anspruch 15 zur Herstellung eines zweiten Blasformteils, wobei das zusätzliche zweite Halsteil an die Stelle des zweiten Halsteils tritt,
- insbesondere wobei das zusätzliche zweite Halsteil zumindest während des Abkühlens des ersten Blasformteils und/oder während des Trennens des zweiten Halsteils von dem ersten Blasformteil und/oder während einer Nachbearbeitung des ersten Blasformteils mit dem zweiten Grundteil verbunden ist.

Diese Verfahren beziehen sich auf die Verwendung eines mehrteiligen zweiten Dorns. Auch diesbezüglich wird auf die entsprechende Erläuterung der erfindungsgemäßen Vorrichtung Bezug genommen.

Bei dem Blasformteil handelt es sich insbesondere um einen gasdichten Liner eines Hochdruckbehälters. Der Liner ist aus einem Kunststoffmaterial hergestellt und weist mindestens einen ersten Halsabschnitt auf, der vorzugsweise mit einem metallischen Einlegeteil versehen ist. Das Einlegeteil dient zur Befestigung eines Anschlusselements, beispielsweise eines Bossteils, eines Ventils, einer Füllarmatur oder eines Verschlusses.

Weitere Merkmale und Vorteile der Erfindung sind Gegenstand der nachfolgenden Beschreibung bevorzugter Ausführungsbeispiele.

In der Zeichnung zeigt:
- Fig. 1: eine perspektivische Ansicht einer ersten Ausführungsform eines Blasformteils in Form eines Liners für einen Hochdruckbehälter;
- Fig. 2: eine geschnittene Ansicht des Blasformteils gemäß Fig. 1;
- Fig. 3a und 3b: eine Seitenansicht und eine geschnittene Ansicht einer Vorrichtung zum Extrusionsblasformen eines Blasformteils gemäß Fig. 1, wobei die Vorrichtung einen ersten Dorn und einen zweiten Dorn umfasst;
- Fig. 4a bis 4c: geschnittene Ansichten des ersten Dorns;
- Fig. 5a bis 5c: geschnittene Ansichten des zweiten Dorns;
- Fig. 6a und 6b: den Figuren 3a und 3b entsprechende Ansichten mit einem extrudierten Vorformling;
- Fig. 7a und 7b: bis Fig. 12a und 12b den Figuren 6a und 6b entsprechende Ansichten zu nachfolgenden Verfahrensschritten;
- Fig. 13: eine perspektivische Ansicht des Blasformteils gemäß Fig. 1, mit einem ersten Halsteil und mit einem ersten Einlegeteil;
- Fig. 14: eine der Fig. 13 entsprechende Ansicht mit Werkzeugen, die jeweils an dem ersten Halsteil und an dem ersten Einlegeteil angesetzt sind;
- Fig. 15: eine der Fig. 13 entsprechende Ansicht, wobei das erste Halsteil von dem ersten Einlegeteil entfernt ist;
- Fig. 16: eine der Fig. 13 entsprechende Ansicht mit abgetrenntem ersten Halsteil;
- Fig. 17: eine perspektivische Ansicht einer weiteren Ausführungsform eines Blasformteils in Form eines Liners für einen Hochdruckbehälter;
- Fig. 18: eine geschnittene Ansicht des Blasformteils gemäß Fig. 17;
- Fig. 19a und 19b: geschnittene Ansichten eines ersten Dorns zur Herstellung eines Blasformteils gemäß Fig. 17;
- Fig. 20a und 20b: geschnittene Ansichten eines zweiten Dorns zur Herstellung eines Blasformteils gemäß Fig. 17; und
- Fig. 21a und 21b: eine der Figur 8a entsprechende Seitenansicht und eine der Figur 8b entsprechende geschnittene Ansicht einer Vorrichtung zum Extrusionsblasformen eines Blasformteils gemäß Fig. 17.

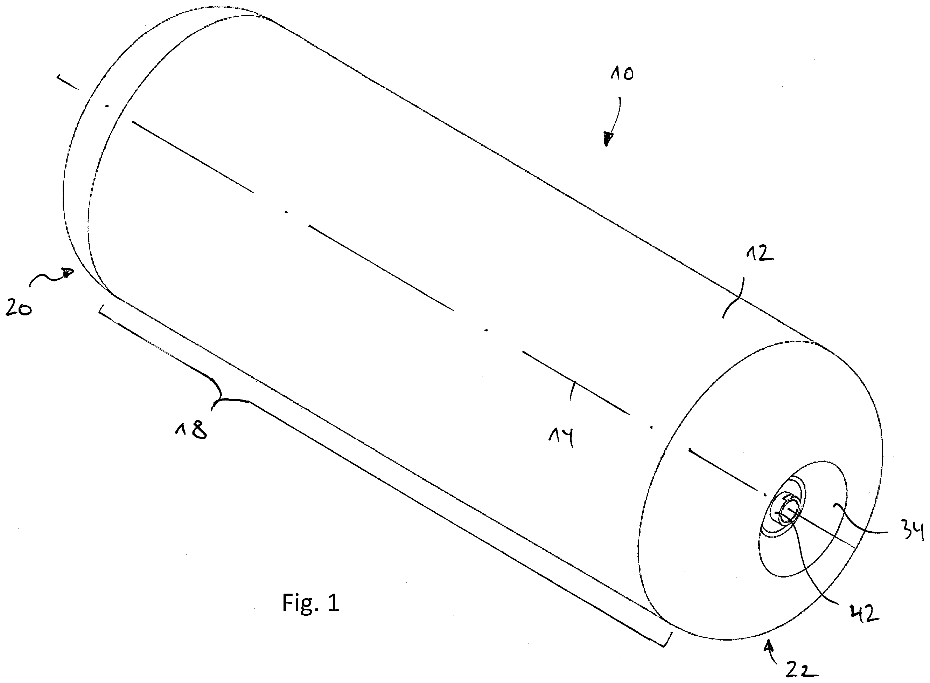

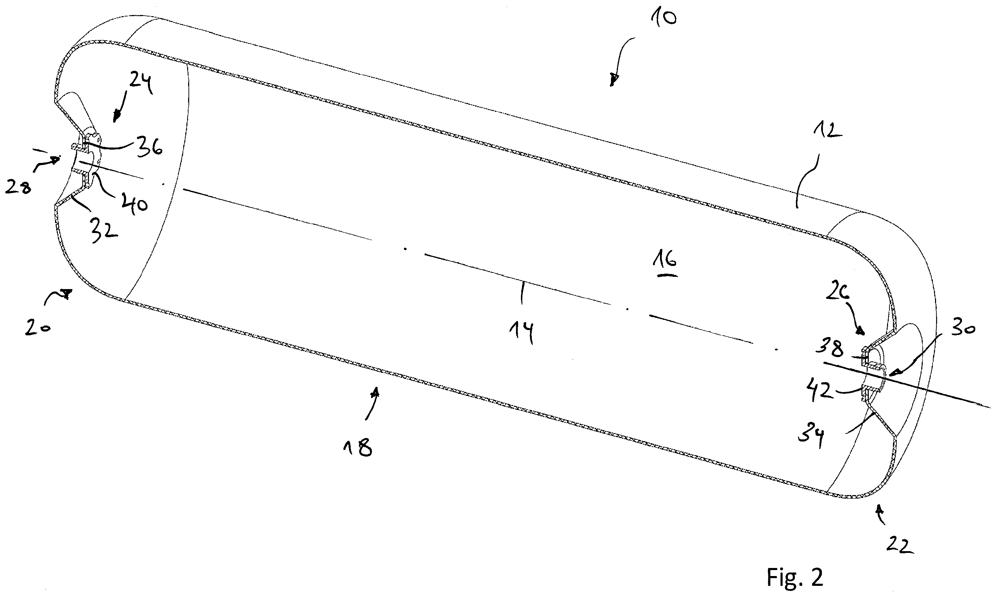

Eine erste Ausführungsform eines Blasformteils ist in den Figuren 1 und 2 dargestellt und dort insgesamt mit dem Bezugszeichen 10 bezeichnet. Das Blasformteil 10 weist einen Blasformkörper 12 aus einem Kunststoffmaterial auf, der sich entlang einer zentralen Blasformteilachse 14 erstreckt und einen Speicherraum 16 zum Speichern von Gas, insbesondere von druckbeaufschlagtem Gas, begrenzt.

Das in den Figuren 1 und 2 dargestellte Blasformteil 10 wird auch als Innenhülle oder "Liner" bezeichnet und dient zur Gasabdichtung. Ein solcher Liner ist Teil eines Hochdruckbehälters, der - über die Darstellung gemäß Figuren 1 und 2 hinausgehend - eine Armierung aufweist, insbesondere aus einem faserverstärkten Kunststoffmaterial, welches den Blasformkörper 12 umgibt.

Der Blasformkörper 12 weist einen zu der zentralen Blasformteilachse 14 konzentrischen, zylindrischen Abschnitt 18 auf und ferner einen ersten Endabschnitt 20 und einen zweiten Endabschnitt 22. Die Endabschnitte 20 und 22 sind bezogen auf den zylindrischen Abschnitt 18 und längs der zentralen Blasformteilachse 14 gesehen auf voneinander abgewandten Seiten des Blasformteils 10 angeordnet und können beispielsweise halbkugelförmig, kalottenförmig oder in Form eines Klöpperbodens ausgeführt sein. Der zylindrische Abschnitt 18 und die Endabschnitte 20 und 22 begrenzen gemeinsam den Speicherraum 16.

Der erste Endabschnitt 20 weist einen ersten Halsabschnitt 24 auf; der zweite Endabschnitt 22 weist einen zweiten Halsabschnitt 26 auf. Im Bereich der jeweiligen Halsabschnitte 24, 26 sind jeweilige Blasformteilöffnungen ausgebildet, nämlich eine erste Blasformteilöffnung 28 und eine zweite Blasformteilöffnung 30. Die Blasformteilöffnungen 28, 30 sind konzentrisch zu der zentralen Blasformteilachse 14 angeordnet.

Die Halsabschnitte 24 und 26 weisen jeweils einen sich von außen in Richtung des Speicherraums 16 verjüngenden Trichterabschnitt auf, nämlich einen ersten Trichterabschnitt 32 und einen zweiten Trichterabschnitt 34.

Die Trichterabschnitte 32, 34 münden jeweils an einem scheibenförmigen Abschnitt, nämlich einem ersten scheibenförmigen Abschnitt 36 und einem zweiten scheibenförmigen Abschnitt 38.

An den scheibenförmigen Abschnitten 36, 38 ist jeweils ein Einlegeteil aus einem metallischen Material angeordnet, nämlich ein erstes Einlegeteil 40 und ein zweites Einlegeteil 42. Die Einlegeteile dienen zur Befestigung eines in der Zeichnung nicht dargestellten Anschlusselements, insbesondere eines Bossteils, eines Ventils, einer Füllarmatur oder eines Verschlusses.

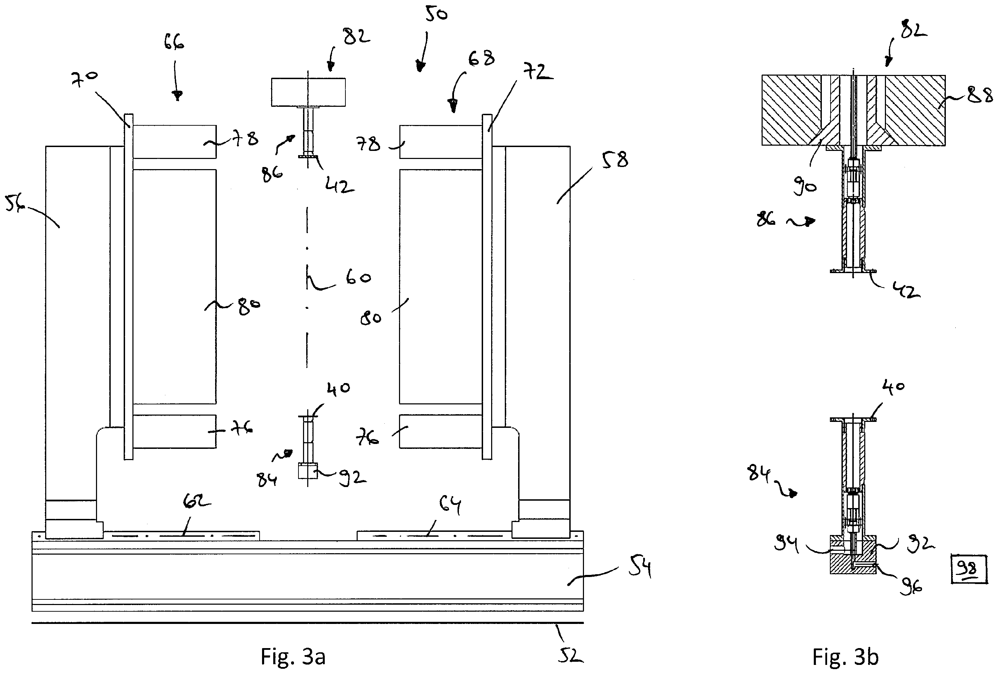

Eine Ausführungsform einer Vorrichtung zum Extrusionsblasformen eines Blasformteils 10 ist in der Zeichnung (siehe beispielsweise Figur 3a) mit dem Bezugszeichen 50 bezeichnet.

Die Vorrichtung 50 ist auf einer Aufstellfläche 52 aufgestellt und umfasst ein Maschinenbett 54. Das Maschinenbett 54 dient zur Anordnung von Werkzeughaltern, nämlich einem ersten Werkzeughalter 56 und einem zweiten Werkzeughalter 58. Die Werkzeughalter 56, 58 sind auf einander gegenüberliegenden Seiten einer vertikal orientierten Trennebene 60 angeordnet.

Die Werkzeughalter 56, 58 sind jeweils entlang einer Verfahrachse, nämlich einer ersten Verfahrachse 62 und einer zweiten Verfahrachse 64, relativ zu dem Maschinenbett 54 bewegbar, sodass die Werkzeughälften 56 und 58 jeweils in Richtung auf die Trennebene 60 zu und in dazu entgegengesetzter Richtung verfahrbar sind.

Die Werkzeughalter 56, 58 dienen jeweils zur Anordnung einer Werkzeughälfte, nämlich einer ersten Werkzeughälfte 66 und einer zweiten Werkzeughälfte 68.

Zur Anordnung und Handhabung der ersten Werkzeughälfte 66 ist an dem ersten Werkzeughalter 56 eine erste Aufspannplatte 70 angeordnet. Zur Anordnung und Handhabung der zweiten Werkzeughälfte 68 ist an dem zweiten Werkzeughalter 58 eine zweite Aufspannplatte 72 angeordnet.

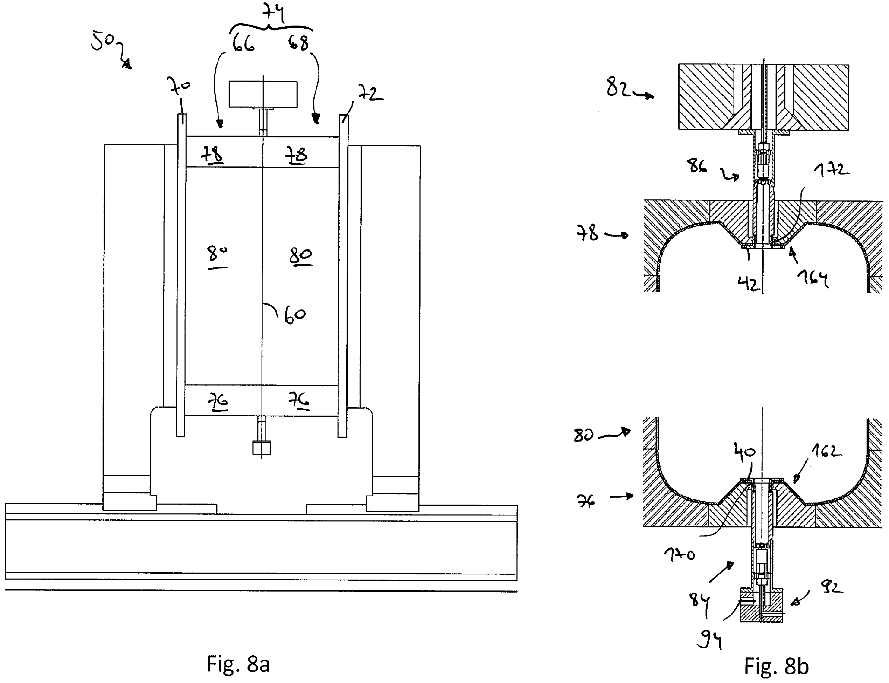

Die Werkzeughälften 66 und 68 bilden gemeinsam ein mehrteiliges Werkzeug 74, vgl. beispielsweise Figur 8a.

Die Werkzeughälften 66, 68 weisen jeweils mehrere Werkzeugteile auf, nämlich jeweils ein erstes Endteil 76, jeweils ein zweites Endteil 78 und jeweils ein Mittelteil 80.

Die ersten Endteile 76 sind dem ersten Endabschnitt 20 des Blasformteils 10 zugeordnet. Die zweiten Endteile 78 sind dem zweiten Endabschnitt 22 des Blasformteils 10 zugeordnet. Die Mittelteile 80 sind dem zylindrischen Abschnitt 18 des Blasformteils 10 zugeordnet.

Die Endteile 76 und 78 jeweils einer Werkzeughälfte 66, 68 sind jeweils relativ zu dem Mittelteil 80 derselben Werkzeughälfte 66, 68 bewegbar an der jeweiligen Aufspannplatte 70, 72 gehalten. Auf diese Weise können die Endteile 76, 78 zu dem Mittelteil 80 beabstandet angeordnet sein (vgl. Figur 3a) oder in Anlage mit dem jeweiligen Mittelteil 80 stehen (vgl. beispielsweise Figur 8a).

Die Vorrichtung 50 umfasst außerdem eine Extrusionsdüse 82, welche oberhalb des Werkzeugs 74 angeordnet ist.

Ferner umfasst die Vorrichtung 50 einen ersten Dorn 40, der in einem unteren Bereich des Werkzeugs 74 angeordnet ist und einem zweiten Dorn 86, der in einem oberen Bereich des Werkzeugs 74 angeordnet ist. Der zweite Dorn 86 ist an der Extrusionsdüse 82 angeordnet.

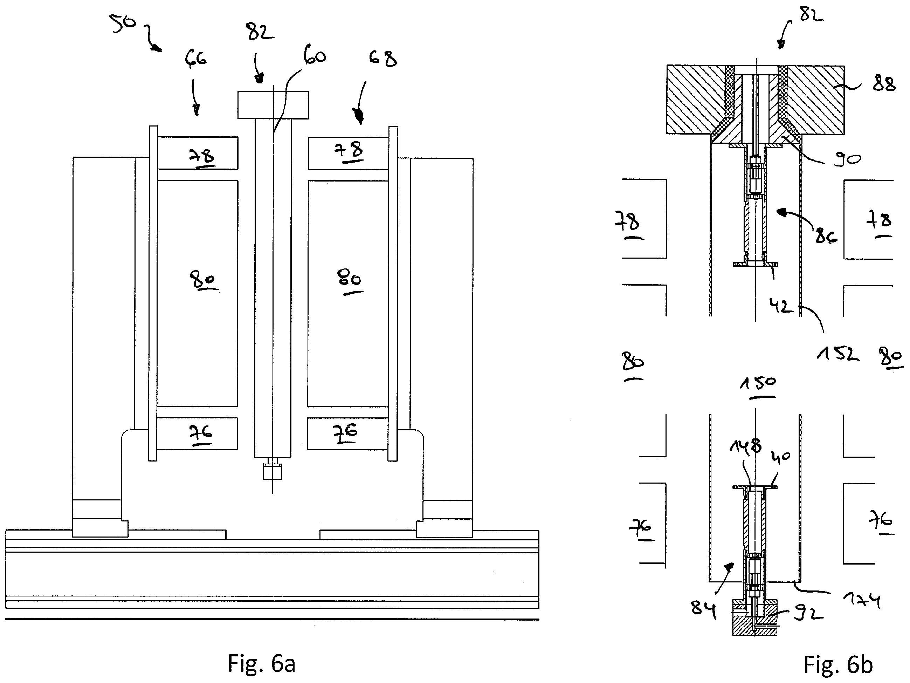

Die Extrusionsdüse 82 weist ein Kopfteil 88 und ein Düsenteil 90 auf, wobei das Düsenteil 90 relativ zu dem Kopfteil 88 bewegbar ist zwischen einer geschlossenen Stellung (vgl. Figur 3b) und einer geöffneten Stellung (vgl. Figur 6b).

Der zweite Dorn 86 ist mit dem Düsenteil 90 der Extrusionsdüse 82 verbunden.

Der erste Dorn 84 ist mit einem Dornhalter 92 verbunden, der einen Blasluftanschluss 94 zur Versorgung des ersten Dorns 84 mit Blasluft und einen Steueranschluss 96 aufweist, der mit einer ersten Steuereinrichtung 98 kommuniziert (vgl. Figur 3b).

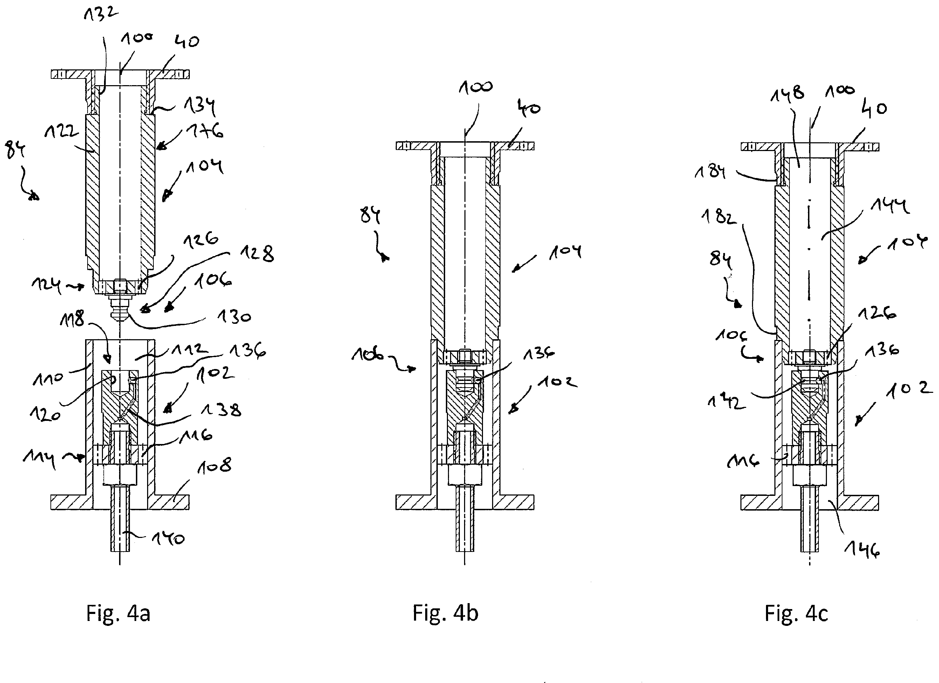

Der Aufbau des ersten Dorns 84 wird nachfolgend unter Bezugnahme auf die Figuren 4a bis 4c beschrieben.

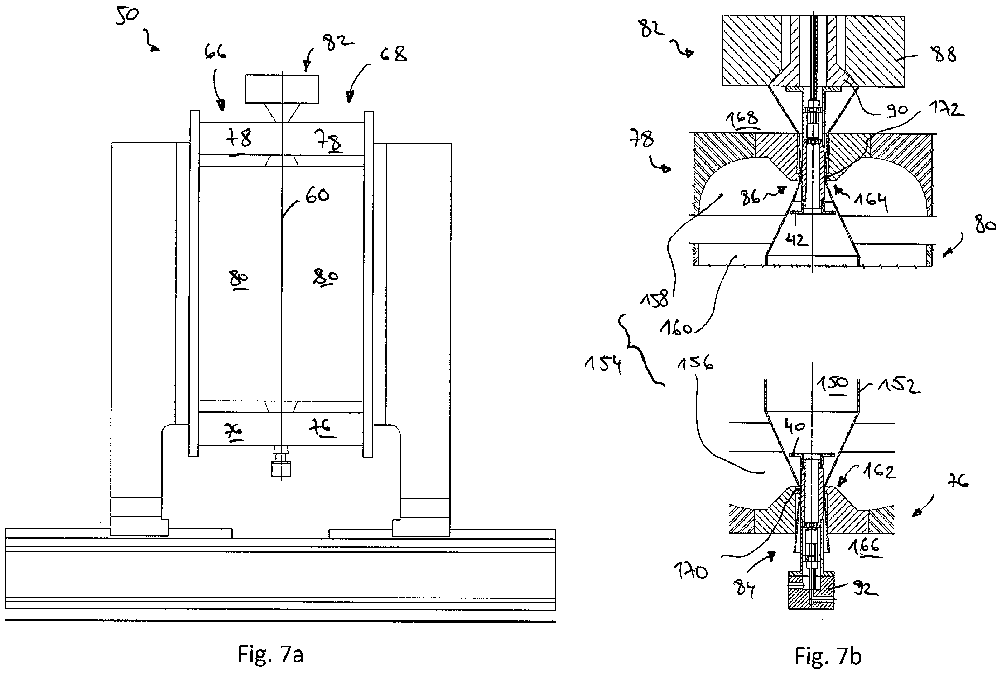

Der erste Dorn 84 erstreckt sich entlang einer zentralen ersten Dornachse 100 und ist mehrteilig. Ein erstes Grundteil 102 dient zur Verbindung mit dem Dornhalter 92. Das erste Grundteil 102 ist bezogen auf eine Kavität 154 (vgl. Figur 7b) des Werkzeugs 74 weiter entfernt angeordnet als ein erstes Halsteil 104 des ersten Dorns 84.

Das erste Grundteil 102 und das erste Halsteil 104 sind mittels einer ersten Verbindungseinrichtung 106 wiederholbar lösbar miteinander verbindbar.

Das erste Grundteil 102 weist einen ersten Befestigungsabschnitt 108 zur Befestigung an dem Dornhalter 92 auf. Das erste Grundteil 102 weist ferner einen hohlzylindrischen Abschnitt 110 auf, der einen Innenraum 112 begrenzt.

In dem Innenraum 112 ist ein Halter 114 angeordnet. Der Halter 114 weist Durchtrittsöffnungen 116 zum Durchtritt von Blasluft auf. Der Halter 114 dient zum Halten eines ersten Verbindungsabschnitts 118 der ersten Verbindungseinrichtung 106. Der erste Verbindungsabschnitt 118 umfasst beispielsweise einen Aufnahmeraum 120.

Das erste Halsteil 104 umfasst einen sich entlang der ersten Dornachse 100 erstreckenden Hohlzylinder 122. An einem dem ersten Grundteil 102 zugewandten Ende ist an dem Hohlzylinder 112 ein zweiter Halter 124 angeordnet, der ebenfalls Durchtrittsöffnungen 126 zum Durchtritt von Blasluft aufweist. Der zweite Halter 124 dient zum Halten eines zweiten Verbindungsabschnitts 128 der ersten Verbindungseinrichtung 106. Der zweite Verbindungsabschnitt 128 umfasst beispielsweise einen Zapfen 130.

Der Hohlzylinder 122 weist an seinem dem zweiten Verbindungsabschnitt 128 entgegengesetzten Ende einen Befestigungsabschnitt 132 zur lösbaren Befestigung des ersten Einlegeteils 40 auf. Der Befestigungsabschnitt 132 ist beispielsweise stutzenförmig und erstreckt sich beispielsweise bis zu einem Anschlag 134, der eine Position des ersten Einlegeteils 40 längs der zentralen ersten Dornachse 100 definiert. Das erste Einlegeteil 40 ist beispielsweise kraftschlüssig auf den Befestigungsabschnitt 132 aufgesteckt oder vorzugsweise mit dem Befestigungsabschnitt 132 verschraubt.

Die erste Verbindungseinrichtung 106 umfasst ein steuerbares Verriegelungselement 136, das zwischen einer Freigabestellung (vgl. Figuren 4a und 4b) und einer Verriegelungsstellung (vgl. Figur 4c) bewegbar ist. Das Verriegelungselement 136 ist mittels eines Steuerkanals 138 mit Druckluft beaufschlagbar. Der Steuerkanal 138 ist durch eine Steuerleitung 140 gespeist, welche mit dem Steueranschluss 96 des Dornhalters 92 fluidwirksam verbunden ist (vgl. Figur 3b).

Ausgehend von einem voneinander getrennten Zustand des ersten Grundteils 102 und des ersten Halsteils 104 wird eine Verbindung zwischen dem ersten Grundteil 102 und dem ersten Halsteil 104 dadurch hergestellt, dass das erste Halsteil 104 längs der ersten Dornachse 100 in Richtung auf das erste Grundteil 102 bewegt wird, sodass der zweite Verbindungsabschnitt 128 in dem ersten Verbindungsabschnitt 118 aufgenommen ist (entspricht einem Übergang von Figur 4a auf Figur 4b).

In Figur 4b sind das erste Grundteil 102 und das erste Halsteil 104 in einem miteinander gefügten, jedoch noch voneinander lösbaren Zustand dargestellt. Zur Verriegelung des ersten Halsteils 104 an dem ersten Grundteil 102 wird das Verriegelungselement 136 über den Steueranschluss 96, die Steuerleitung 140 und den Steuerkanal 138 mit Druckluft beaufschlagt, sodass das Verriegelungselement 136 nach radial innen verlagert und mit einer Verriegelungselementaufnahme 142 des zweiten Verbindungsabschnitts 128 verriegelt wird.

In dem Zustand gemäß Figur 4c ist das erste Halsteil 104 mit dem ersten Grundteil 102 verbunden und verriegelt. Diese Verriegelung wird dadurch gelöst, dass die Druckbeaufschlagung des Verriegelungselements 136 gestoppt wird, sodass das Verriegelungselement 136 wieder frei bewegbar ist, insbesondere nach radial außen.

Der erste Dorn 84 weist ferner einen ersten Blaskanal 144 auf. Der erste Blaskanal 144 erstreckt sich von einem Eingang 146, der mit dem Blasluftanschluss 94 des Dornhalters 92 kommuniziert (vgl. Figur 3b), bis zu einem Ausgang 148, aus welchem heraus Blasluft in einen Hohlraum 150 zuführbar ist, der von einem Vorformling 152 umgrenzt ist, vgl. Figur 6b.

Die Durchtrittsöffnungen 116 und 126 des ersten Dorns 84 dienen dazu, dass Blasluft auch durch den Innenraum 112 des ersten Grundteils 102 hindurch zugeführt werden kann.

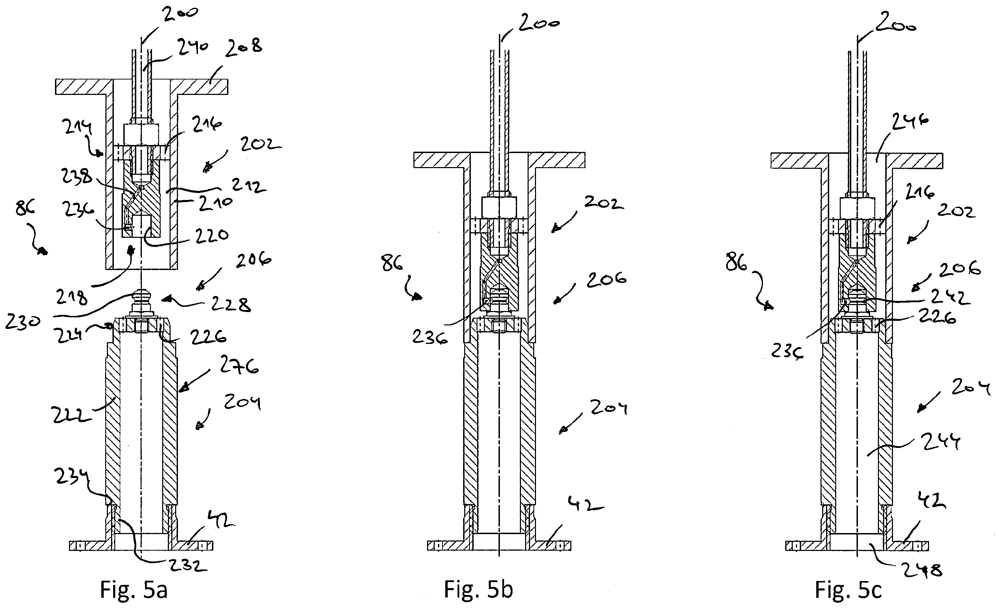

Der Aufbau des zweiten Dorns 86 wird nachfolgend unter Bezugnahme auf die Figuren 5a bis 5c beschrieben.

Der zweite Dorn 86 erstreckt sich entlang einer zentralen zweiten Dornachse 200 und ist mehrteilig. Ein zweites Grundteil 202 dient zur Verbindung mit dem Düsenteil 90 der Extrusionsdüse 82. Das zweite Grundteil 202 ist bezogen auf die Kavität 156 (vgl. Figur 7b) des Werkzeugs 74 weiter entfernt angeordnet als ein zweites Halsteil 204 des zweiten Dorns 86.

Das zweite Grundteil 202 und das zweite Halsteil 204 sind mittels einer zweiten Verbindungseinrichtung 206 wiederholbar lösbar miteinander verbindbar.

Das zweite Grundteil 202 weist einen zweiten Befestigungsabschnitt 208 zur Befestigung an dem Düsenteil 90 der Extrusionsdüse 82 auf. Das zweite Grundteil 202 weist ferner einen hohlzylindrischen Abschnitt 210 auf, der einen Innenraum 212 begrenzt.

In dem Innenraum 212 ist ein Halter 214 angeordnet. Der Halter 214 weist Durchtrittsöffnungen 216 zum Durchtritt von Blasluft auf. Der Halter 214 dient zum Halten eines ersten Verbindungsabschnitts 218 der zweiten Verbindungseinrichtung 206. Der erste Verbindungsabschnitt 218 umfasst beispielsweise einen Aufnahmeraum 220.

Das zweite Halsteil 204 umfasst einen sich entlang der zweiten Dornachse 200 erstreckenden Hohlzylinder 222. An einem dem zweiten Grundteil 202 zugewandten Ende ist an dem Hohlzylinder 212 ein zweiter Halter 224 angeordnet, der ebenfalls Durchtrittsöffnungen 226 zum Durchtritt von Blasluft aufweist. Der zweite Halter 224 dient zum Halten eines zweiten Verbindungsabschnitts 228 der zweiten Verbindungseinrichtung 206. Der zweite Verbindungsabschnitt 228 umfasst beispielsweise einen Zapfen 230.

Der Hohlzylinder 222 weist an seinem dem zweiten Verbindungsabschnitt 228 entgegengesetzten Ende einen Befestigungsabschnitt 232 zur lösbaren Befestigung des zweiten Einlegeteils 42 auf. Der Befestigungsabschnitt 232 ist beispielsweise stutzenförmig und erstreckt sich beispielsweise bis zu einem Anschlag 234, der eine Position des zweiten Einlegeteils 42 längs der zentralen zweiten Dornachse 200 definiert. Das zweite Einlegeteil 42 ist beispielsweise kraftschlüssig auf den Befestigungsabschnitt 232 aufgesteckt oder vorzugsweise mit dem Befestigungsabschnitt 232 verschraubt.

Die zweite Verbindungseinrichtung 206 umfasst ein steuerbares Verriegelungselement 236, das zwischen einer Freigabestellung (vgl. Figuren 5a und 5b) und einer Verriegelungsstellung (vgl. Figur 5c) bewegbar ist. Das Verriegelungselement 236 ist mittels eines Steuerkanals 238 mit Druckluft beaufschlagbar. Der Steuerkanal 238 ist durch eine Steuerleitung 240 gespeist, welche mit einer zweiten Steuereinrichtung oder mit der ersten Steuereinrichtung 98 kommuniziert (vgl. Figur 3b).

Ausgehend von einem voneinander getrennten Zustand des zweiten Grundteils 202 und des zweiten Halsteils 204 wird eine Verbindung zwischen dem zweiten Grundteil 202 und dem zweiten Halsteil 204 dadurch hergestellt, dass das zweite Halsteil 204 längs der zweiten Dornachse 200 in Richtung auf das zweite Grundteil 202 bewegt wird, sodass der zweite Verbindungsabschnitt 228 in dem ersten Verbindungsabschnitt 218 aufgenommen ist (entspricht einem Übergang von Figur 5a auf Figur 5b).

In Figur 5b sind das zweite Grundteil 202 und das zweite Halsteil 204 in einem miteinander gefügten, jedoch noch voneinander lösbaren Zustand dargestellt. Zur Verriegelung des zweiten Halsteils 204 an dem zweiten Grundteil 202 wird das Verriegelungselement 236 über die Steuerleitung 240 und den Steuerkanal 238 mit Druckluft beaufschlagt, sodass das Verriegelungselement 236 nach radial innen verlagert und mit einer Verriegelungselementaufnahme 242 des zweiten Verbindungsabschnitts 128 verriegelt wird.

In dem Zustand gemäß Figur 5c ist das zweite Halsteil 204 mit dem zweiten Grundteil 202 verbunden und verriegelt. Diese Verriegelung wird dadurch gelöst, dass die Druckbeaufschlagung des Verriegelungselements 236 gestoppt wird, sodass das Verriegelungselement 236 wieder frei bewegbar ist, insbesondere nach radial außen.

Der zweite Dorn 86 weist ferner einen zweiten Blaskanal 244 auf. Der zweite Blaskanal 244 erstreckt sich von einem Eingang 246, der bei Bedarf mit einem in der Zeichnung nicht dargestellten Blasluftanschluss kommuniziert, bis zu einem Ausgang 248, aus welchem heraus Blasluft in den Hohlraum 150 zuführbar ist, der von dem Vorformling 152 umgrenzt ist, vgl. Figur 6b.

Die Durchtrittsöffnungen 216 und 226 des zweiten Dorns 86 dienen dazu, dass Blasluft auch durch den Innenraum 212 des zweiten Grundteils 202 hindurch zugeführt werden kann.

Die Werkzeugteile 76, 78 und 80 des Werkzeugs 74 begrenzen jeweils Teilabschnitte der Kavität 154, vgl. Figur 7b. Die ersten Endteile 76 begrenzen einen ersten Teilabschnitt 156 der Kavität 154. Die zweiten Endteile 78 begrenzen einen zweiten Teilabschnitt 158 der Kavität 154. Die Mittelteile 80 begrenzen einen Zwischenabschnitt 160 der Kavität 154.

Der erste Teilabschnitt 156 der Kavität 154 dient zur Abformung des ersten Endabschnitts 20 des Blasformkörpers 12. Der zweite Teilabschnitt 158 der Kavität 154 dient zur Abformung des zweiten Endabschnitts 22 des Blasformkörpers 12. Der Zwischenabschnitt 160 der Kavität 154 dient zur Abformung des zylindrischen Abschnitts 18 des Blasformkörpers 12.

Der erste Teilabschnitt 156 der Kavität 154 mündet an einem ersten Halsbereich 162 der ersten Endteile 76 des Werkzeugs 74. Der zweite Teilabschnitt 158 der Kavität 154 mündet an einem zweiten Halsbereich 164 der zweiten Endteile 78 des Werkzeugs 74.

Der erste Halsbereich 162 bildet einen Übergang zwischen der Kavität 154 und einem Umgebungsbereich 166 des Werkzeugs 74, insbesondere der ersten Endteile 76. Der zweite Halsbereich 164 bildet einen Übergang zwischen der Kavität 154 und einem Umgebungsbereich 168 des Werkzeugs 74, insbesondere der zweiten Endteile 78.

Als Bestandteil des ersten Halsbereichs 162 weisen die ersten Endteile 76 des Werkzeugs 74 eine erste Trennkante 170 auf. Als Bestandteil des zweiten Halsbereichs 164 weisen die zweiten Endteile 78 des Werkzeugs 74 eine zweite Trennkante 172 auf.

Die Trennkanten 170 und 172 bilden eine Verengung der jeweiligen Halsbereiche 162, 164, mittels welchen Materialabschnitte des extrudierten Vorformlings 102 durchtrennt werden können.

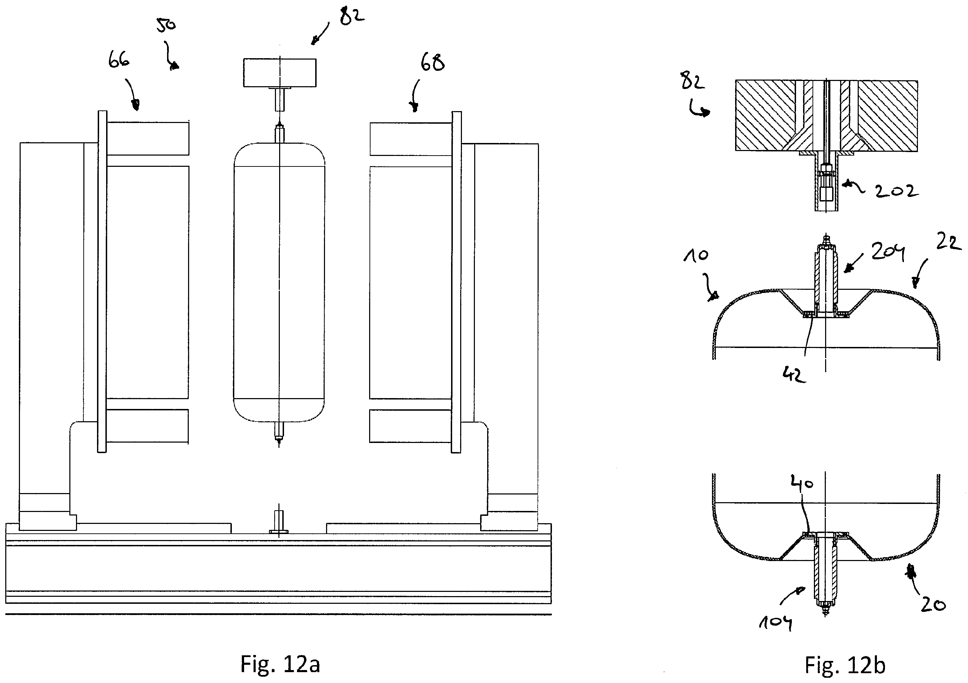

Ausgehend von einem Zustand der Vorrichtung 50 gemäß Figuren 3a und 3b wird nachfolgend unter Bezugnahme auf die Figuren 6a, 6b bis 12a, 12b die Herstellung eines Blasformteils 10 beschrieben.

In einem Ausgangszustand gemäß Figur 6a sind die Werkzeughälften 66, 68 voneinander getrennt. Außerdem sind die Werkzeugteile 76, 78, 80 jeweils einer Werkzeughälfte 66, 68 zueinander beabstandet. In diesem Zustand wird das Düsenteil 90 von dem Kopfteil 88 der Extrusionsdüse 82 abgehoben, und es wird ein schlauchförmiger Vorformling 152 extrudiert. Der Vorformling 152 richtet sich der Schwerkraft entsprechend aus und umfängt zunächst nur den zweiten Dorn 86 und mit zunehmender Extrusionsdauer auch einen Teil der Länge des ersten Dorns 84. Die Extrusion des Vorformlings 152 wird gestoppt, wenn eine untere Begrenzung 174 des Vorformlings 152 benachbart zu dem Dornhalter 92 angeordnet ist.

Ausgehend von dem geöffneten Zustand der Werkzeughälften 66 und 68 werden diese geschlossen, indem die Werkzeughälften 66 und 68 auf die Trennebene 60 zu bewegt werden, bis sich die Werkzeughälften 66 und 68 berühren, vgl. Figur 7a. In diesem Zustand sind die Teile 76, 78 und 80 jeweils einer Werkzeughälfte 66 und 68 noch zueinander beabstandet. Der erste Dorn 84 durchtritt den ersten Halsbereich 162. Der zweite Dorn 86 durchtritt den zweiten Halsbereich 164.

Die erste Trennkante 170 liegt an einer Außenfläche 176 des ersten Halsteils 104 an, vgl. Figur 4a.

Die zweite Trennkante 172 liegt an einer Außenfläche 276 des zweiten Halsteils 204 an, vgl. Figur 5a.

In einem Zustand, in welchem die Teile 76, 78, 80 der Werkzeughälften 66 und 68 noch zueinander beabstandet sind, sind die Einlegeteile 40, 42 noch zu den jeweiligen Halsbereichen 162, 164 beabstandet. Von diesem Zustand ausgehend werden die Teile 76, 78, 80 der Werkzeughälften 66 und 68 geschlossen, vgl. Figur 8a. Bei feststehenden Dornen 84 und 86 bewirkt das Schließen der ersten Endteile 76 und der zweiten Endteile 78 mit den Mittelteilen 80, dass die Einlegeteile 40 und 42 - jeweils unter Einschluss von Material des Vorformlings 152 - unmittelbar benachbart zu den jeweiligen Halsbereich 162, 164 angeordnet sind, vgl. Figur 8b.

Das Schließen der Teile 76, 78, 80 der Werkzeughälften 66, 68 hat zur Folge, dass die Trennkanten 170, 172 überschüssiges Material von dem Vorformling 152 abtrennen.

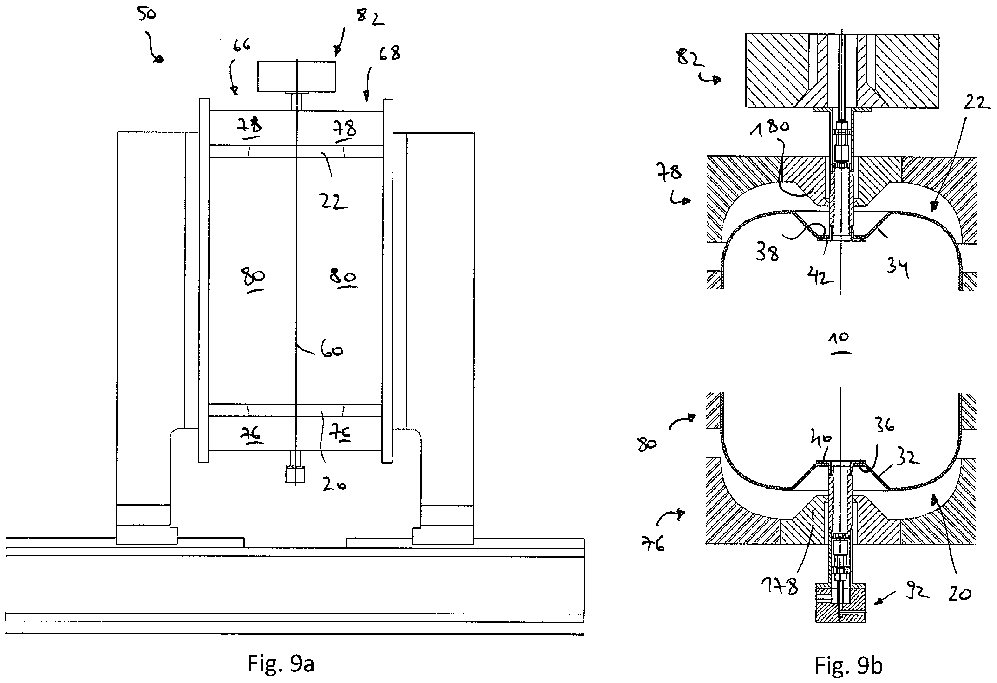

Durch Zufuhr von Blasluft über den Blasluftanschluss 94 in den Hohlraum 150 des Vorformlings 152 formt sich der Vorformling 152 - der Geometrie der Kavität 154 entsprechend - aus. Mit Ausformung des Vorformlings 152 entsteht ein Blasformteil 10, vgl. Figur 9b.

Zur Entformung des Blasformteils 10 werden ausgehend von einem Zustand gemäß Figuren 8a und einem vollständig geschlossenen Werkzeug 74 zunächst die Teile 76, 78, 80 jeweils einer Werkzeughälfte 66, 68 zueinander beabstandet, vgl. Figur 9b. Auf diese Weise werden die ersten Endteile 76 und die zweiten Endteile 78 zu den jeweiligen Endabschnitten 20, 22 des Blasformkörpers 12 beabstandet, sodass trichterförmige Werkzeugabschnitte 178, 180 zu den jeweiligen Trichterabschnitten 32, 34 des Blasformteils 10 beabstandet und für ein nachfolgendes Öffnen der Werkzeughälften 66 und 68 freigestellt sind.

Ausgehend von dem Zustand der Vorrichtung 50 gemäß Figuren 9a und 9b werden die Werkzeughälften 66 und 68 geöffnet, sodass das abgeformte Blasformteil 10 freigestellt ist. Das Blasformteil 10 ist zunächst noch an den Dornen 84 und 86 fixiert, wobei der erste Dorn 84 mit dem Dornhalter 92 verbunden ist und wobei der zweite Dorn 86 mit der Extrusionsdüse 82 verbunden ist.

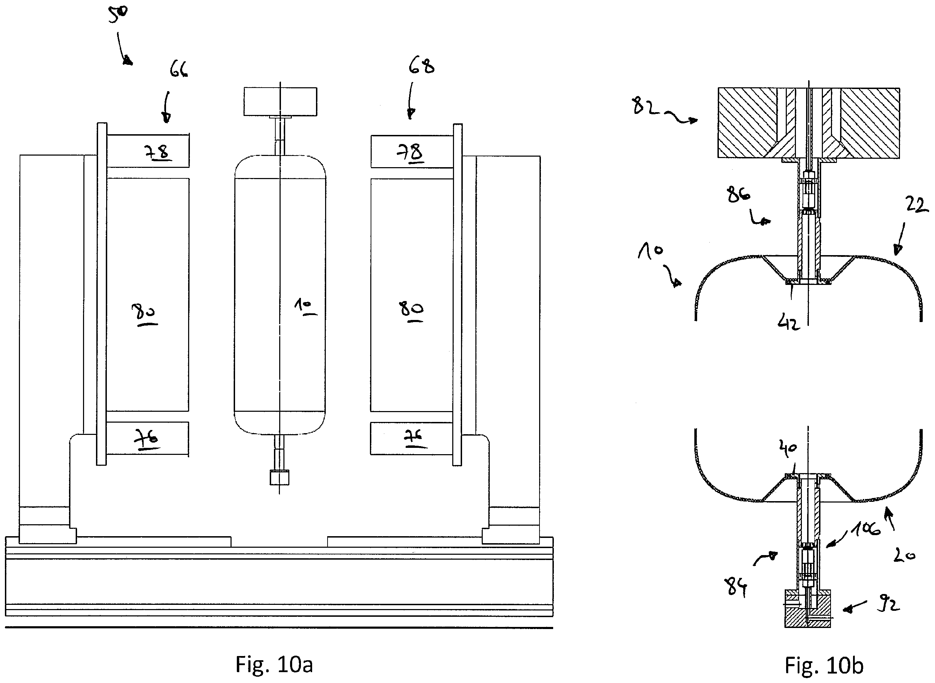

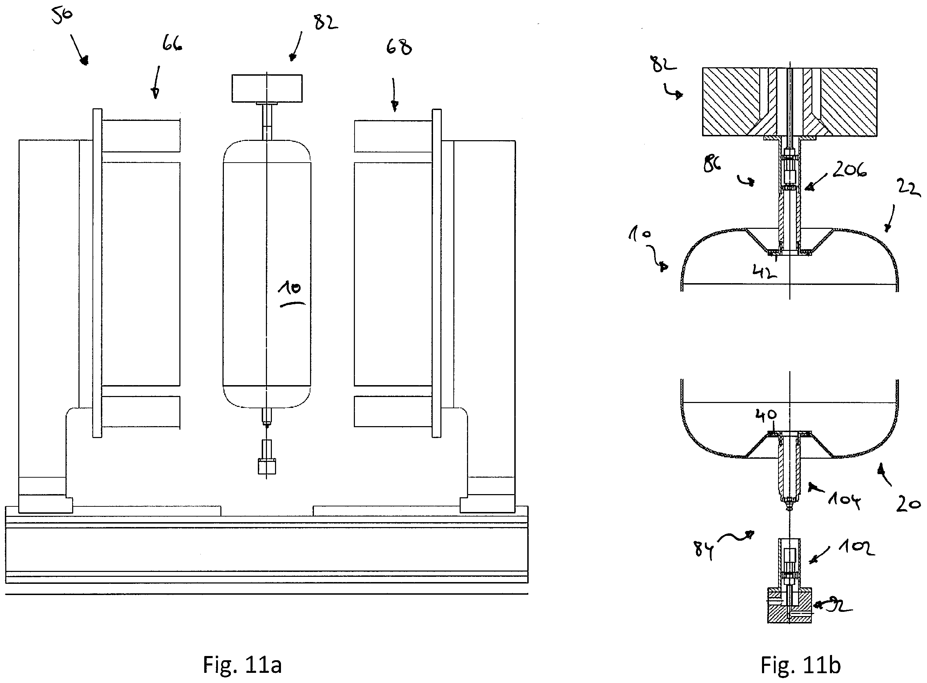

Ausgehend von dem vorstehend beschriebenen Zustand gemäß Figur 10b wird die erste Verbindungseinrichtung 106 betätigt, sodass eine Verbindung zwischen dem ersten Grundteil 102 und dem ersten Halsteil 104 gelöst wird. Anschließend kann das erste Grundteil 102 durch Bewegung des Dornhalters 92 von dem ersten Halsteil 104 entfernt werden, vgl. Figur 11b. Das erste Halsteil 104 verbleibt zunächst an dem ersten Blasformteil 10.

Anschließend kann durch Betätigung der zweiten Verbindungseinrichtung 206 die Verbindung zwischen dem zweiten Halsteil 204 und dem zweiten Grundteil 202 des zweiten Dorns 86 gelöst werden. Nach Lösen dieser Verbindung werden das zweite Grundteil 202 und das zweite Halsteil 204 voneinander getrennt, beispielsweise indem das Blasformteil 10 gemeinsam mit dem ersten Halsteil 104 und dem zweiten Halsteil 204 nach unten bewegt wird, vgl. Figur 12b.

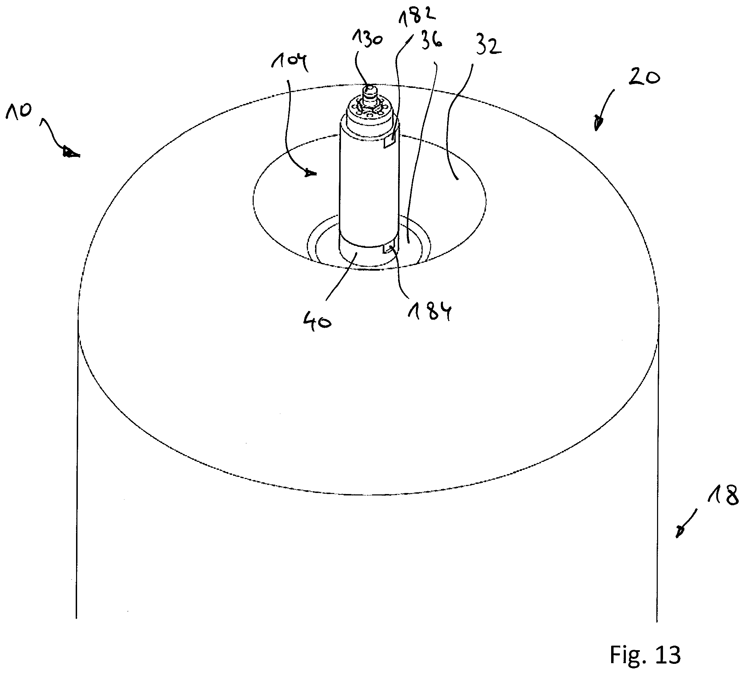

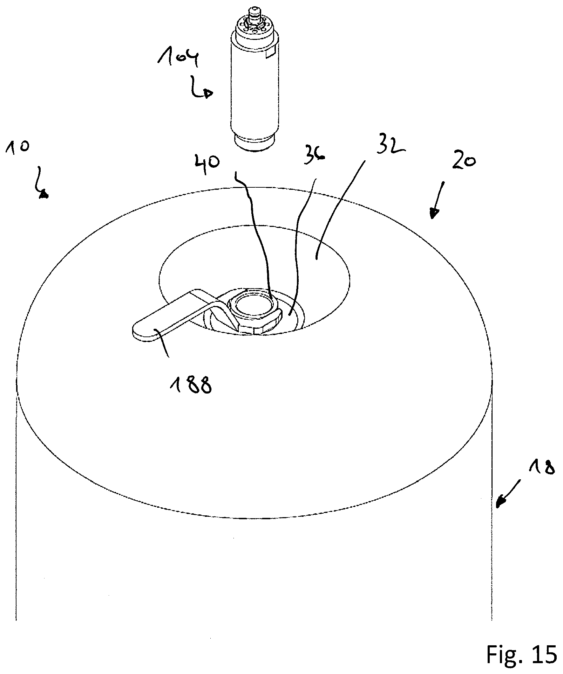

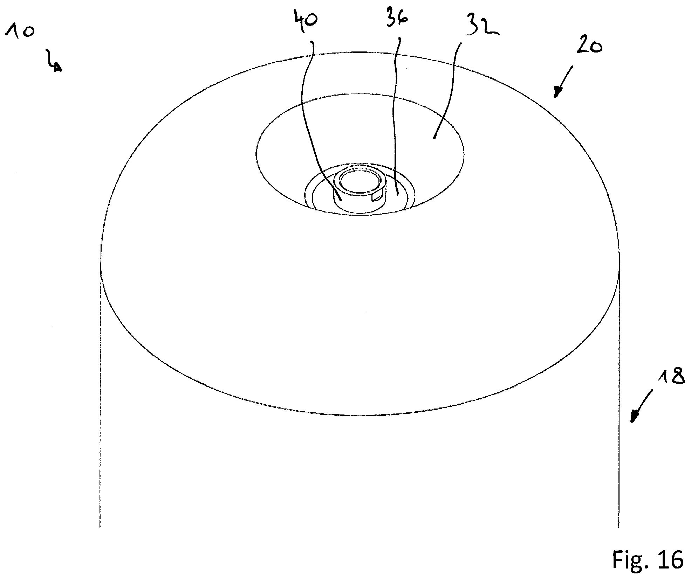

Nachfolgend wird unter Bezugnahme auf die Figuren 13 bis 16 beschrieben, wie das erste Halsteil 104 von dem Blasformteil 10, insbesondere von dem ersten Einlegeteil 40 des ersten Blasformteils 10, getrennt wird.

Zur Vereinfachung der Demontage des ersten Halsteils 104 von dem ersten Einlegeteil 40 ist es bevorzugt, wenn das erste Halsteil 104 eine Eingriffsfläche 182 für ein Werkzeug aufweist, beispielsweise für einen ersten Schraubenschlüssel. Das erste Einlegeteil 40 weist ebenfalls eine Eingriffsfläche 184 für ein weiteres Werkzeug auf, insbesondere für einen weiteren Schraubenschlüssel.

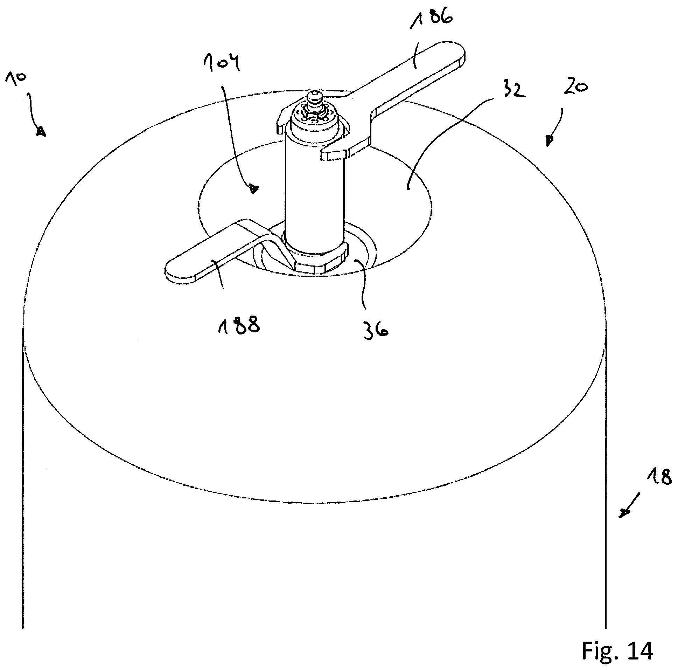

In der Figur 14 sind zwei Schraubenschlüssel 186, 188 dargestellt, welche jeweils in Eingriff mit den vorgenannten Eingriffsfläche 182, 184 stehen. Der erste Schraubenschlüssel 186 dient dazu, das erste Halsteil 104 von dem ersten Einlegeteil 40 abzuschrauben. Der weitere Schraubenschlüssel 188 dient zur Fixierung des ersten Einlegeteils 40. Dabei werden über den Schraubenschlüssel 186 in das erste Halsteil 104 eingeleitete Drehmomente über das erste Einlegeteil 40 in den weiteren Schraubenschlüssel 188 abgeleitet. Dies hat den Vorteil, dass bei der Demontage des ersten Halsteils 104 von dem Blasformteil 10 entstehende Demontagekräfte nicht in das Kunststoffmaterial des Blasformkörpers 12 eingeleitet werden. Dies ermöglicht eine besonders einfache und schonende Trennung des ersten Halsteils 104 von dem ersten Einlegeteil 40 und somit von dem Blasformkörper 12 des Blasformteils 10.

Es versteht sich, dass nach Entformung eines Blasformteils 10, welches noch mit mindestens einem Halsteil 104, 204 verbunden ist, die Vorrichtung 50 bereits wieder nutzbar ist zur Herstellung eines weiteren Blasformteils 10. Zu diesem Zweck wird ein zusätzliches erstes Halsteil bereitgestellt, dass hinsichtlich seines Aufbaus und seiner Funktionsweise identisch zu dem ersten Halsteil 104 ist. Es wird ferner ein zusätzliches zweites Halsteil bereitgestellt, dass hinsichtlich seines Aufbaus und seiner Funktionsweise zu dem zweiten Halsteil 204 identisch ist.

Die zusätzlichen Halsteile werden mit den jeweiligen Grundteilen 102, 202 der jeweiligen Dorne 84, 86 verbunden, sodass ein weiteres Blasformteil 10 hergestellt werden kann, dem Ablauf der Figuren 6a bis 12b entsprechend. Auf diese Weise können Leerzeiten der Vorrichtung 50 vermieden werden.

Gleichzeitig ist eine besonders schonende Fertigbearbeitung des Blasformteils 10 möglich, wobei diese Fertigbearbeitung auch die Trennung mindestens eines Halsteils 104, 204 von mindestens einem Einlegeteil 40, 42 umfasst.

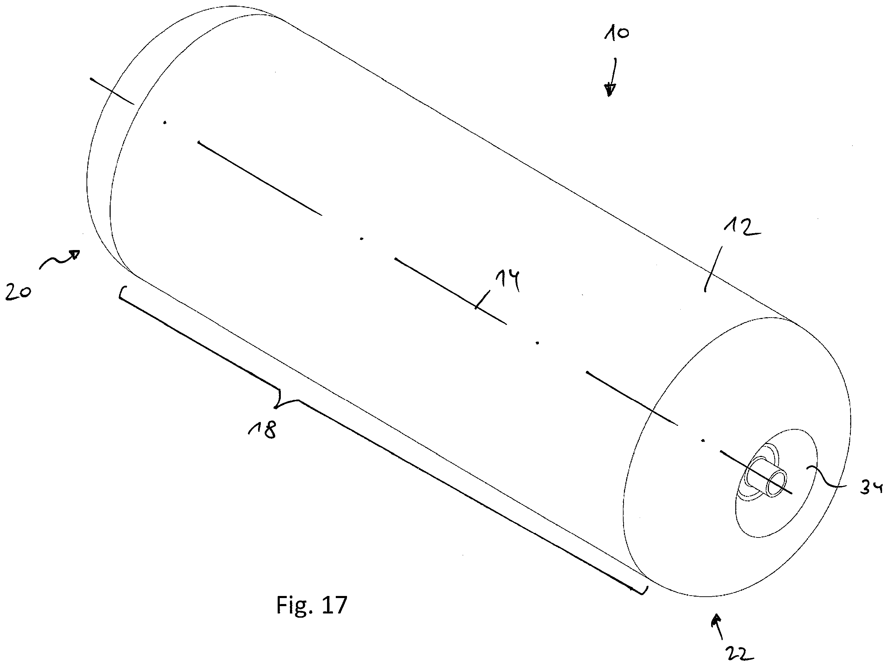

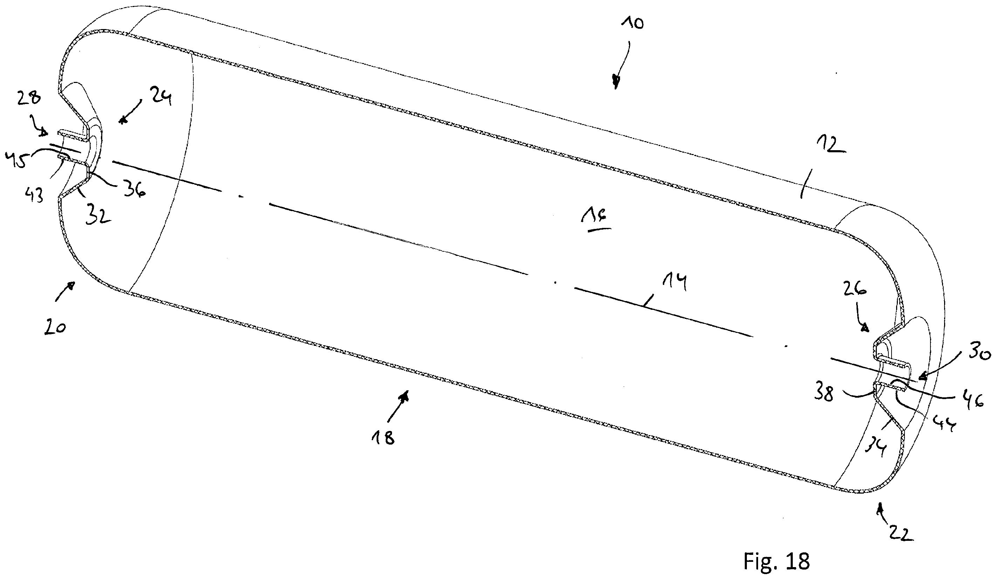

Nachfolgend wird unter Bezugnahme auf Figuren 17 und 18 eine weitere Ausführungsform eines Blasformteils 10 beschrieben. Das Blasformteil 10 entspricht von seinem Aufbau und seiner Funktionsweise im Wesentlichen dem Blasformteil 10 gemäß Figuren 1 und 2. Im Unterschied zu dem Blasformteil 10 gemäß Figuren 1 und 2 weist das Blasformteil 10 gemäß Figuren 17 und 18 keine Einlegeteile 42, 44 auf. Stattdessen sind in den jeweiligen Halsabschnitten 24, 26 zylindrische Stutzen 43, 44 vorgesehen, die jeweils an die scheibenförmigen Abschnitte 36, 38 angeformt sind. Die zylindrischen Stutzen 43, 44 weisen jeweils hohlzylindrische Innenflächenabschnitte 45, 46 auf.

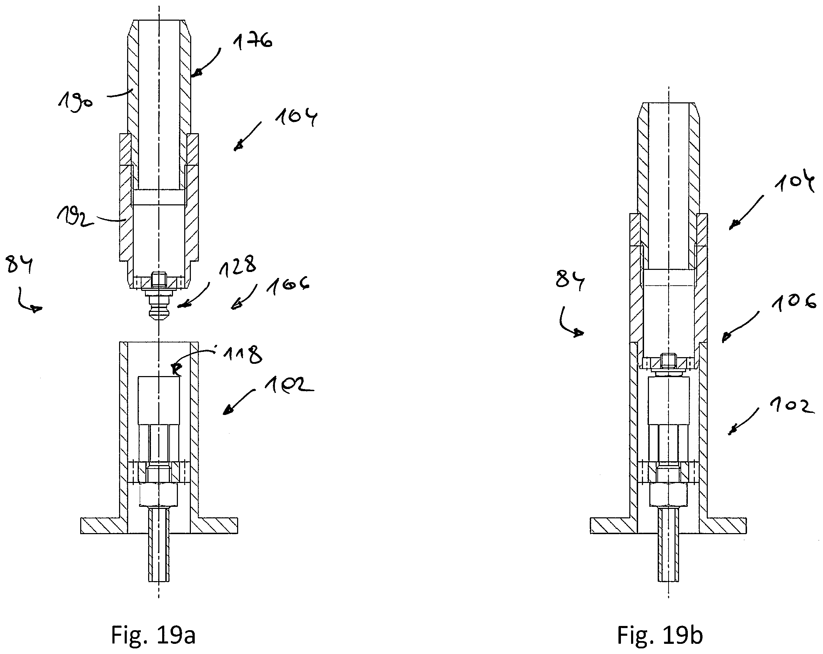

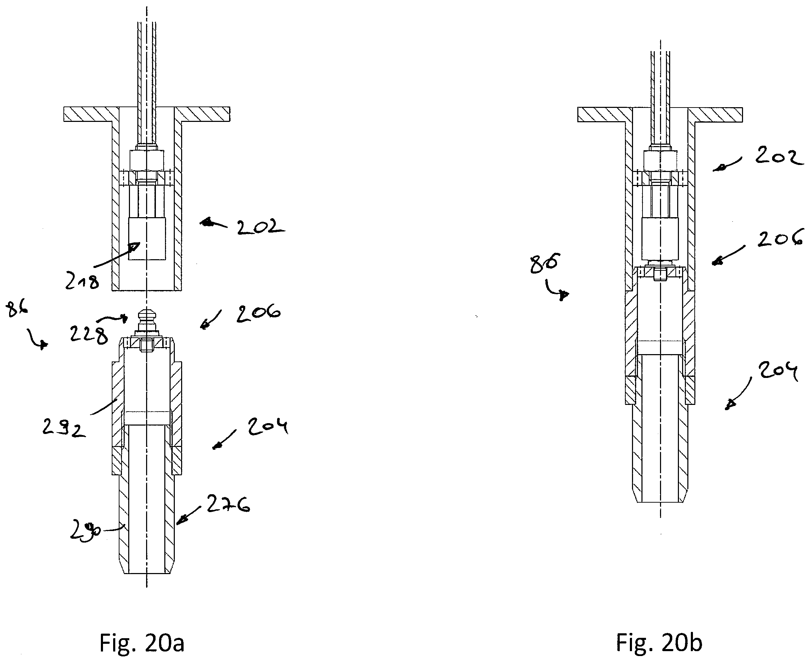

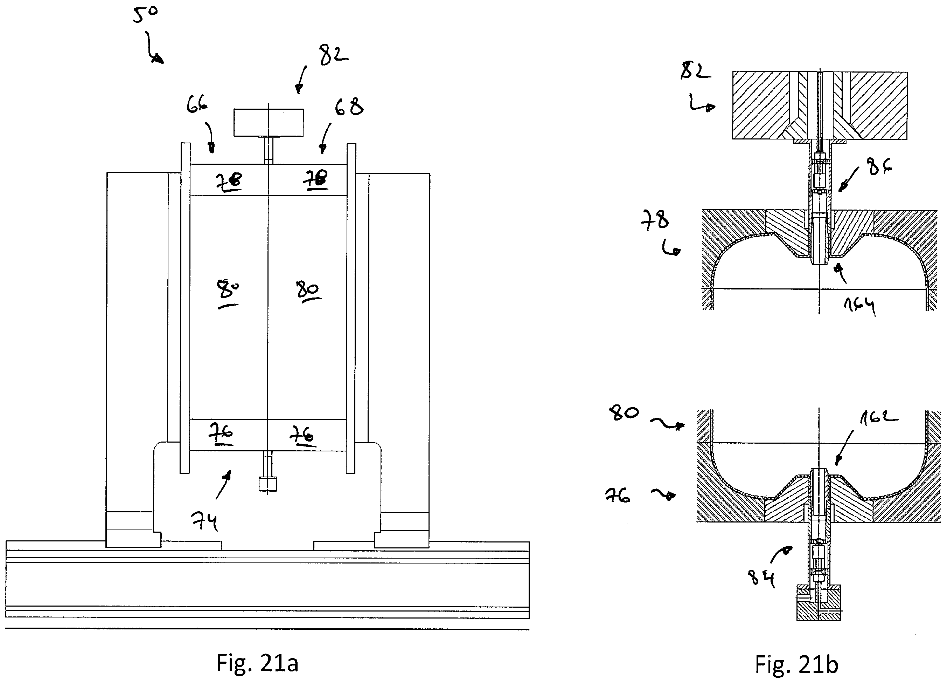

Die Innenflächenabschnitte 45, 46 werden durch Außenflächen 176, 276 jeweiliger Halsteile 104, 204 abgeformt, vgl. Figuren 19a und 20a. Die Außenflächen 176, 276 sind während des Ausformens eines Vorformlings 152 mit Blasluft in den jeweiligen Halsbereichen 162, 164 des Werkzeugs 74 angeordnet und formen dort die Innenflächenabschnitte 45, 46 des Blasformteils 10 ab, vgl. Figur 21b.

Bei den in den Figuren 19a bis 20b dargestellten Ausführungsbeispielen der Halsteile 104, 204 sind die Außenflächen 176, 276 durch jeweilige Abformzylinder 190, 290 gebildet, die an einem jeweiligen Haltekörper 192, 292 der jeweiligen Halsteile 104, 204 gehalten sind, insbesondere verschraubt sind.

Im Übrigen wird hinsichtlich des Aufbaus und der Funktionsweise des Blasformkörpers 10 gemäß Figuren 17 und 18 auf die vorstehende Beschreibung zu dem Blasformkörper 10 gemäß Figuren 1 und 2 Bezug genommen. Bezüglich der Vorrichtung 50 und der Herstellung des Blasformkörpers 10 gemäß Figuren 17 und 18 wird ebenfalls auf die vorstehende Beschreibung, insbesondere zu Figuren 3a bis 12b, Bezug genommen.

Es versteht sich, dass eine in der Zeichnung nicht dargestellte Ausführungsform eines Blasformkörpers 10 nur einen Halsabschnitt 24 oder 26 aufweist, an dem ein Einlegeteil 40 oder 42 angeordnet sein kann oder nicht.

Es ist ferner möglich, dass ein Blasformteil 10 zwei Halsabschnitte 24, 26 aufweist, wobei einer der Halsabschnitte 24, 26 mit einem Einlegeteil 40 oder 42 versehen ist und wobei der andere Halsabschnitt 26, 24 einen zylindrischen Stutzen 43 oder 44 mit einem hohlzylindrischen Innenflächenabschnitt 45 oder 46 aufweist.

## Patentansprüche

1. Vorrichtung (50) zum Extrusionsblasformen eines Blasformteils (10), mit einer Extrusionsdüse (82) zur Extrusion eines schlauchförmigen Vorformlings (152), mit einem mehrteiligen Werkzeug (74), das eine Kavität (154) zur Anordnung des Vorformlings (152) aufweist, wobei die Kavität (154) an einem ersten Halsbereich (162) des Werkzeugs (74) mündet, und mit einem ersten Dorn (84) zur Anordnung an und/oder in dem ersten Halsbereich (162), **dadurch gekennzeichnet, dass** der erste Dorn (84) längs einer zentralen ersten Dornachse (100) mehrteilig ist und ein kavitätsfernes erstes Grundteil (102) und ein kavitätsnahes erstes Halsteil (104) aufweist, wobei das erste Grundteil (102) und das erste Halsteil (104) über eine erste Verbindungseinrichtung (106) lösbar miteinander verbunden sind.

2. Vorrichtung (50) nach Anspruch 1, **dadurch gekennzeichnet, dass** die erste Verbindungseinrichtung (106) eine Kupplungsvorrichtung umfasst, insbesondere eine Schnellkupplungsvorrichtung.

3. Vorrichtung (50) nach einem der vorstehenden Ansprüche, ferner umfassend eine erste Steuereinrichtung (98) zur Steuerung des Verbindungszustands der ersten Verbindungseinrichtung (106), insbesondere zur Fernsteuerung des Verbindungszustands der ersten Verbindungseinrichtung (106).

4. Vorrichtung (50) nach einem der vorstehenden Ansprüche, **dadurch gekennzeichnet, dass** das erste Halsteil (104) eine Außenfläche (176) aufweist, welche zur Abformung eines ersten Innenflächenabschnitts (45) des Blasformteils (10) ausgebildet ist.

5. Vorrichtung (50) nach einem der vorstehenden Ansprüche, **dadurch gekennzeichnet, dass** das erste Halsteil (104) mit einem ersten Einlegeteil (40) lösbar verbindbar oder verbunden ist, wobei das erste Einlegeteil (40) zum Verbleib an und/oder in dem Blasformteil (10) ausgebildet ist.

6. Vorrichtung (50) nach einem der vorstehenden Ansprüche, ferner umfassend ein kavitätsnahes zusätzliches erstes Halsteil, das anstelle des ersten Halsteils (104) lösbar mit dem ersten Grundteil (102) verbindbar ist.

7. Vorrichtung (50) nach einem der vorstehenden Ansprüche, **dadurch gekennzeichnet, dass** der erste Dorn (84) im Bereich einer der Extrusionsdüse (82) zugewandten Seite des Werkzeugs (74) angeordnet ist, oder dass der erste Dorn (84) im Bereich einer der Extrusionsdüse (82) abgewandten Seite des Werkzeugs (74) angeordnet ist.

8. Vorrichtung (50) nach einem der vorstehenden Ansprüche, **dadurch gekennzeichnet, dass** der erste Dorn (84) einen ersten Blaskanal (144) zum Einbringen von Blasluft in einen von dem Vorformling (152) umgrenzten Hohlraum (150) aufweist.

9. Vorrichtung (50) nach einem der vorstehenden Ansprüche, **dadurch gekennzeichnet, dass** die Kavität (154) an einem zweiten Halsbereich (164) des Werkzeugs (74) mündet, und dass die Vorrichtung (50) einen zweiten Dorn (86) zur Anordnung an und/oder in dem zweiten Halsbereich (164) des Werkzeugs (74) aufweist, wobei der zweite Dorn (86) längs einer zentralen zweiten Dornachse (200) mehrteilig ist und ein kavitätsfernes zweites Grundteil (202) und ein kavitätsnahes zweites Halsteil (204) aufweist, wobei das zweite Grundteil (202) und das zweite Halsteil (204) über eine zweite Verbindungseinrichtung (206) lösbar miteinander verbunden sind.

10. Verfahren zur Herstellung eines Blasformteils (10), unter Verwendung einer Vorrichtung (50) nach einem der vorstehenden Ansprüche, umfassend:
a) Bereitstellen eines mehrteiligen Werkzeugs (74), das eine Kavität (154) zur Ausformung eines Blasformteils (10) aufweist, wobei die Kavität (154) an einem ersten Halsbereich (162) des Werkzeugs (74) mündet,
b) Bereitstellen eines längs einer zentralen ersten Dornachse (100) mehrteiligen ersten Dorns (84), mit einem kavitätsfernen ersten Grundteil (102) und mit einem kavitätsnahen ersten Halsteil (104),
c) lösbares Verbinden des ersten Grundteils (102) und des ersten Halsteils (104),
d) Extrudieren eines schlauchförmigen Vorformlings (152),
e) Anordnen des Vorformlings (152) in dem geöffneten Werkzeug (74),
f) Anordnen des ersten Halsteils (104) an und/oder in dem ersten Halsbereich (162) des Werkzeugs (74),
g) Schließen des Werkzeugs (74), sodass der Vorformling (152) in der Kavität (154) des Werkzeugs (74) angeordnet ist,
h) Einbringen von Blasluft in einen von dem Vorformling (152) umgrenzten Hohlraum (150) zur Verformung des Vorformlings (152) und zur Ausformung eines ersten Blasformteils (10),
i) Öffnen des Werkzeugs (74),
j) Lösen der Verbindung zwischen dem ersten Grundteil 102 und dem ersten Halsteil (104),
k) Trennen des ersten Grundteils (102) von dem ersten Halsteil (104), wobei das erste Halsteil (104) an dem ersten Blasformteil (10) verbleibt,
optional 1): Abkühlen des ersten Blasformteils (10), m) Trennen des ersten Halsteils (104) von dem ersten Blasformteil (10).

11. Verfahren nach Anspruch 10, ferner umfassend
- Abformen eines Innenflächenabschnitts (45) des ersten Blasformteils (10) an einer Außenfläche (176) des ersten Halsteils (102).

12. Verfahren nach Anspruch 10 oder 11, ferner umfassend
- vorzugsweise nach b) oder c): Bereitstellen eines ersten Einlegeteils (40) und Verbinden des ersten Einlegeteils (40) mit dem ersten Halsteil (104),
- Durchführung von m) mit der Maßgabe, dass das erste Halsteil (104) von dem ersten Einlegeteil (40) des ersten Blasformteils (10) getrennt wird.

13. Verfahren nach einem der Ansprüche 10 bis 12, ferner umfassend
n) Bereitstellen eines kavitätsnahen zusätzlichen ersten Halsteils, das anstelle des ersten Halsteils (104) lösbar mit dem ersten Grundteil (102) verbindbar ist,
o) lösbares Verbinden des ersten Grundteils (102) und des zusätzlichen ersten Halsteils,
- Durchführung der Schritte d) bis m) gemäß Anspruch 10 zur Herstellung eines zweiten Blasformteils (10), wobei das zusätzliche erste Halsteil an die Stelle des ersten Halsteils (104) tritt.

14. Verfahren nach Anspruch 13, **dadurch gekennzeichnet, dass** das zusätzliche erste Halsteil zumindest während des Abkühlens des ersten Blasformteils (10) und/oder während des Trennens des ersten Halsteils (104) von dem ersten Blasformteil (10) und/oder während einer Nachbearbeitung des ersten Blasformteils (10) mit dem ersten Grundteil (102) verbunden ist.

15. Verfahren nach einem der Ansprüche 10 bis 14, wobei die Kavität (154) des mehrteiligen Werkzeugs (74) auch an einem zweiten Halsbereich (164) des Werkzeugs (74) mündet, wobei das Verfahren ferner umfasst:
b2) Bereitstellen eines längs einer zentralen zweiten Dornachse (200) mehrteiligen zweiten Dorns (86), mit einem kavitätsfernen zweiten Grundteil (202) und mit einem kavitätsnahen zweiten Halsteil (204), c2) lösbares Verbinden des zweiten Grundteils (202) und
des zweiten Halsteils (204),
f2) Anordnen des zweiten Halsteils (204) an und/oder in dem zweiten Halsbereich (164) des Werkzeugs (74), j2) Lösen der Verbindung zwischen dem zweiten Grundteil (202) und dem zweiten Halsteil (204),
k2) Trennen des zweiten Grundteils (202) von dem zweiten Halsteil (204), wobei das zweiten Halsteil (204) an dem ersten Blasformteil (10) verbleibt,
m2) Trennen des zweiten Halsteils (204) von dem ersten Blasformteil (10).

## Claims

1. A device (50) for the extrusion blow molding of a blow-molded part (10), having an extrusion nozzle (82) for extruding a tubular parison (152), a multi-part mold (74) that has a cavity (154) for positioning the parison (152) therein, the cavity (154) opening into a first neck region (162) of the mold (74), and further having a first mandrel (84) for positioning on and/or in the first neck region (162), **characterized in that** the first mandrel (84) is composed of multiple parts along a central first mandrel axis (100) and has a first base part (102) remote from the cavity and a first neck part (104) close to the cavity, the first base part (102) and the first neck part (104) being releasably connected to one another via a first connecting device (106).

2. The device (50) as recited in claim 1,
**characterized in that** the first connecting device (106) includes a coupling device, in particular a quick coupling device.

3. The device (50) as recited in any of the preceding claims,
further comprising a first control device (98) for controlling the connection state of the first connecting device (106), in particular for remotely controlling the connection state of the first connecting device (106).

4. The device (50) as recited in any of the preceding claims,
**characterized in that** the first neck part (104) has an outer surface (176) configured to shape a first inner surface portion (45) of the blow-molded part (10).

5. The device (50) as recited in any of the preceding claims,
**characterized in that** the first neck part (104) is releasably connectable to or connected to a first insert (40), the first insert (40) being designed to remain on and/or in the blow-molded part (10).

6. The device (50) as recited in any of the preceding claims,
further comprising an additional first neck part close to the cavity, which is releasably connectable to the first base part (102) in place of the first neck part (104).

7. The device (50) as recited in any of the preceding claims,
**characterized in that** the first mandrel (84) is located in the region of an end of the mold (74) facing the extrusion nozzle (82) or **in that** the first mandrel (84) is located in the region of an end of the mold (74) facing away from the extrusion nozzle (82).

8. The device (50) as recited in any of the preceding claims,
**characterized in that** the first mandrel (84) has a first blow channel (144) for introducing blow air into a hollow space (150) defined by the parison (152).

9. The device (50) as recited in any of the preceding claims,
**characterized in that** the cavity (154) opens into a second neck region (164) of the mold (74), and **in that** the device (50) has a second mandrel (86) for positioning on and/or in the second neck region (164) of the mold (74), the second mandrel (86) being composed of multiple parts along a central second mandrel axis (200) and having a second base part (202) remote from the cavity and a second neck part (204) close to the cavity, the second base part (202) and the second neck part (204) being releasably connected to one another via a second connecting device (206).

10. A method for producing a blow-molded part (10), using a device (50) according to any of the preceding claims, the method comprising:
a) providing a multi-part mold (74) having a cavity (154) for shaping a blow-molded part (10), the cavity (154) opening into a first neck region (162) of the mold (74);
b) providing a first mandrel (84) composed of multiple parts along a central first mandrel axis (100) and having a first base part (102) remote from the cavity and a first neck part (104) close to the cavity;
c) releasably connecting the first base part (102) and the first neck part (104);
d) extruding a tubular parison (152);
e) positioning the parison (152) in the open mold (74);
f) positioning the first neck part (104) on and/or in the first neck region (162) of the mold (74);
g) closing the mold (74) so that the parison (152) is positioned in the cavity (154) of the mold (74);
h) introducing blow air into a hollow space (150) defined by the parison (152) for deforming the parison (152) and shaping a first blow-molded part (10),
i) opening the mold (74),
j) releasing the connection between the first base part (102) and the first neck part (104);
k) separating the first base part (102) from the first neck part (104), the first neck part (104) remaining on the first blow-molded part (10);
optionally
l): cooling the first blow-molded part (10);
m) separating the first neck part (104) from the first blow-molded part (10).

11. The method as recited in claim 10, further comprising
- forming an inner surface portion (45) of the first blow-molded part (10) by transferring the shape of an outer surface (176) of the first neck part (102) thereto.

12. The method as recited in claim 10 or 11, further comprising
- preferably after b) or c): providing a first insert (40) and connecting the first insert (40) to the first neck part (104),
- performing m) with the proviso that the first neck part (104) is separated from the first insert (40) of the first blow-molded part (10).

13. The method as recited in any of claims 10 through 12, further comprising
n) providing an additional first neck part close to the cavity, which is releasably connectable to the first base part (102) in place of the first neck part (104);
o) releasably connecting the first base part (102) and the additional first neck part;
- performing the steps d) through m) according to claim 10 to produce a second blow-molded part (10), the additional first neck part taking the place of the first neck part (104).

14. The method as recited in claim 13,
**characterized in that** the additional first neck part is in a state of being connected to the first base part (102) at least during the cooling of the first blow-molded part (10) and/or during the separation of the first neck part (104) from the first blow-molded part (10) and/or during secondary processing of the first blow-molded part (10).

15. The method as recited in any of claims 10 through 14, the cavity (154) of the multi-part mold (74) also opening into a second neck region (164) of the mold (74),
the method further comprising:
b2) providing a second mandrel (86) composed of multiple parts along a central second mandrel axis (200) and having a second base part (202) remote from the cavity and a second neck part (204) close to the cavity;
c2) releasably connecting the second base part (202) and the second neck part (204),
f2) positioning the second neck part (204) on and/or in the second neck region (164) of the mold (74);
j2) releasing the connection between the second base part (202) and the second neck part (204);
k2) separating the second base part (202) from the second neck part (204), the second neck part (204) remaining on the first blow-molded part (10);
m2) separating the second neck part (204) from the first blow-molded part (10).

## Revendications

1. Dispositif (50) destiné à l'extrusion-soufflage d'une pièce moulée par soufflage (10), comprenant une filière d'extrusion (82) destinée à extruder une préforme tubulaire (152), un moule en plusieurs parties (74) présentant une cavité (154) destinée à recevoir la préforme (152), la cavité (154) débouchant dans une première zone de col (162) du moule (74), et un premier mandrin (84) destiné à être disposé au niveau de et/ou dans la première zone de col (162), **caractérisé en ce que** le premier mandrin (84) est en plusieurs parties le long d'un premier axe central du mandrin (100) et présente une première partie de base (102) éloignée de la cavité et une première partie de col (104) proche de la cavité, la première partie de base (102) et la première partie de col (104) étant reliées l'une à l'autre de manière amovible par l'intermédiaire d'un premier dispositif de liaison (106).

2. Dispositif (50) selon la revendication 1, **caractérisé en ce que** le premier dispositif de liaison (106) comprend un dispositif d'accouplement, notamment un dispositif d'accouplement rapide.

3. Dispositif (50) selon l'une quelconque des revendications précédentes, comprenant en outre un premier dispositif de commande (98) destiné à commander l'état de liaison du premier dispositif de liaison (106), notamment destiné à commander à distance l'état de liaison du premier dispositif de liaison (106).

4. Dispositif (50) selon l'une quelconque des revendications précédentes, **caractérisé en ce que** la première partie de col (104) présente une surface extérieure (176) qui est conçue pour mouler une première portion de surface intérieure (45) de la pièce moulée par soufflage (10).

5. Dispositif (50) selon l'une quelconque des revendications précédentes, **caractérisé en ce que** la première partie de col (104) peut être reliée de manière amovible à un premier insert (40) ou est reliée de manière amovible à celui-ci, le premier insert (40) étant conçu pour rester au niveau de et/ou dans la pièce moulée par soufflage (10).

6. Dispositif (50) selon l'une quelconque des revendications précédentes, comprenant en outre une première partie de col supplémentaire proche de la cavité, qui peut être reliée de manière amovible à la première partie de base (102) à la place de la première partie de col (104).

7. Dispositif (50) selon l'une quelconque des revendications précédentes, **caractérisé en ce que** le premier mandrin (84) est disposé dans la zone d'un côté du moule (74) orienté vers la filière d'extrusion (82), ou **en ce que** le premier mandrin (84) est disposé dans la zone d'un côté du moule (74) opposé à la filière d'extrusion (82).

8. Dispositif (50) selon l'une quelconque des revendications précédentes, **caractérisé en ce que** le premier mandrin (84) présente un premier canal de soufflage (144) destiné à introduire de l'air de soufflage dans un espace creux (150) délimité par la préforme (152).

9. Dispositif (50) selon l'une quelconque des revendications précédentes, **caractérisé en ce que** la cavité (154) débouche dans une deuxième zone de col (164) du moule (74), et **en ce que** le dispositif (50) comprend un deuxième mandrin (86) destiné à être disposé au niveau de et/ou dans la deuxième zone de col (164) qui est en plusieurs parties le long d'un deuxième axe central du mandrin (200) et présente une deuxième partie de base (202) éloignée de la cavité et une deuxième partie de col (204) proche de la cavité, la deuxième partie de base (202) et la deuxième partie de col (204) étant reliées l'une à l'autre de manière amovible par l'intermédiaire d'un deuxième dispositif de liaison (206).

10. Procédé de fabrication d'une pièce moulée par soufflage (10), utilisant un dispositif (50) selon l'une quelconque des revendications précédentes, comprenant :
a) Fourniture d'un moule en plusieurs parties (74) présentant une cavité (154) destinée au façonnage d'une pièce moulée par soufflage (10), la cavité (154) débouchant dans une première zone de col (162) du moule (74),
b) Fourniture d'un premier mandrin (84) en plusieurs parties, s'étendant longitudinalement le long d'un premier axe central du mandrin (100), avec une première partie de base (102) éloignée de la cavité et une première partie de col (104) proche de la cavité,
c) Liaison détachable de la première partie de base (102) et de la première partie de col (104),
d) Extrusion d'une préforme tubulaire (152),
e) Disposition de la préforme (152) dans le moule (74) ouvert,
f) Disposition de la première partie de col (104) au niveau de et/ou dans la première zone de col (162) du moule (74),
g) Fermeture du moule (74), de sorte que la préforme (152) soit disposée dans la cavité (154) du moule (74),
h) Introduction d'air de soufflage dans un espace creux (150) délimité par la préforme (152) pour déformer la préforme (152) et pour façonner une première pièce moulée par soufflage (10),
i) Ouverture du moule (74),
j) Détachement de la liaison entre la première partie de base 102 et la première partie de col (104),
k) Séparation de la première partie de base (102) de la première partie de col (104), la première partie de col (104) restant sur la première pièce moulée par soufflage (10),
facultatif 1) : Refroidissement de la première pièce moulée par soufflage (10),
m) Séparation de la première partie de col (104) de la première pièce moulée par soufflage (10).

11. Procédé selon la revendication 10, comprenant en outre
- Moulage d'une portion de surface intérieure (45) de la première pièce moulée par soufflage (10) sur une surface extérieure (176) de la première partie de col (102).

12. Procédé selon la revendication 10 ou 11, comprenant en outre
- de préférence selon b) ou c) : Mise à disposition d'un premier insert (40) et liaison du premier insert (40) à la première partie de col (104),
- Mise en œuvre de m), étant entendu que la première partie de col (104) est séparée du premier insert (40) de la première pièce moulée par soufflage (10).

13. Procédé selon l'une quelconque des revendications 10 à 12, comprenant en outre
n) Fourniture d'une partie de col supplémentaire proche de la cavité, qui peut être reliée de manière amovible à la première partie de base (102) à la place de la première partie de col (104),
o) liaison amovible de la première partie de base (102) et de la partie de col supplémentaire,
- exécution des étapes d) à m) conformément à la revendication 10 pour fabriquer une deuxième pièce moulée par soufflage (10), la partie de col supplémentaire remplaçant la première partie de col (104).

14. Procédé selon la revendication 13, **caractérisé en ce que** la partie de col supplémentaire est reliée à la première partie de base (102) au moins pendant le refroidissement de la première pièce moulée par soufflage (10) et/ou pendant la séparation de la première partie de col (104) de la première pièce moulée par soufflage (10) et/ou pendant une finition de la première pièce moulée par soufflage (10).

15. Procédé selon l'une des revendications 10 à 14, dans lequel la cavité (154) du moule en plusieurs parties (74) débouche également au niveau d'une deuxième zone de col (164) du moule (74), le procédé comprenant en outre :
b2) fourniture d'un deuxième mandrin (86) en plusieurs parties, s'étendant le long d'un deuxième axe central du mandrin (200), avec une deuxième partie de base (202) éloignée de la cavité et avec une deuxième partie de col (204) proche de la cavité,
c2) liaison amovible de la deuxième partie de base (202) et de la deuxième partie de col (204),
f2) disposition de la deuxième partie de col (204) au niveau de et/ou dans la deuxième zone de col (164) du moule (74),
j2) désolidarisation de la liaison entre la deuxième partie de base (202) et la deuxième partie de col (204),
k2) séparation de la deuxième partie de base (202) de la deuxième partie de col (204), la deuxième partie de col (204) restant sur la première pièce moulée par soufflage (10),
m2) Séparation de la deuxième partie de col (204) de la première pièce moulée par soufflage (10).
